(19) Europäisches Patentamt

European Patent Office

Office européen des brevets

(11) **EP 0 967 107 B1**

## (12) EUROPÄISCHE PATENTSCHRIFT

(45) Veröffentlichungstag und Bekanntmachung des Hinweises auf die Patenterteilung:
**19.09.2001 Patentblatt 2001/38**

(51) Int Cl.[7]: **B60K 41/16**, F16H 61/46

(21) Anmeldenummer: **98890183.1**

(22) Anmeldetag: **25.06.1998**

(54) **Verfahren zum Steuern einer Fahrzeugantriebseinheit mit stufenlos verstellbarem Getriebe**

Method for controlling a vehicle propulsion unit comprising a continuously variable transmission

Procédé pour controller un ensemble de propulsion de véhicule comprenant une transmission à variation continue

(84) Benannte Vertragsstaaten:
**AT DE FR GB IT**

(43) Veröffentlichungstag der Anmeldung:
**29.12.1999 Patentblatt 1999/52**

(73) Patentinhaber: **ZF FRIEDRICHSHAFEN Aktiengesellschaft**
**88038 Friedrichshafen (DE)**

(72) Erfinder: **Parigger, Martin, Dipl.-Ing.**
**8063 Eggersdorf (AT)**

(74) Vertreter: **Kovac, Werner, Dipl.-Ing.**
**c/o MAGNA EUROPA AG**
**Patentabteilung**
**2. Haidequerstrasse 3**
**1111 Wien (AT)**

(56) Entgegenhaltungen:
| | |
|---|---|
| EP-A- 0 082 951 | EP-A- 0 352 110 |
| EP-A- 0 424 088 | DE-A- 3 439 881 |
| DE-A- 19 631 070 | GB-A- 2 065 837 |

**Beschreibung**

Die Erfindung handelt von einem Verfahren zum Steuern einer Fahrzeugantriebseinheit bestehend aus einem Antriebsmotor und einem Getriebe mit stufenlos verstellbarer Übersetzung, bei welchem Verfahren aus Befehlssignalen und aus Zustandssignalen Steuersignale für den Antriebsmotor und für das Getriebe generiert werden, wobei ein Sollgradient für die Getriebeübersetzung ermittelt wird.

Ein derartiges Verfahren ist etwa aus der DE 196 31 070 A1 bekannt. Bei diesem werden zuerst aus der Fahrgeschwindigkeit des Fahrzeuges untere und obere Grenzwerte generiert, dann werden daraus und aus der momentanen Beschleunigung Beschleunigungsgrenzwerte ermittelt und diese mit einer vom Fahrer gewünschten Beschleunigung verglichen, woraus sich eine Sollbeschleunigung ergibt. Sodann erfolgt eine Verteilung der Beschleunigungsvorgabe auf die Verstellung des Getriebes und des Antriebsmotors. Diese Verteilung ist aber wegen der stufenlosen Verstellbarkeit von Motor und Getriebe und der mutuellen Abhängigkeiten ein besonders schwieriges Problem; besonders, wenn auch noch ein geschwindigkeitsunabhängiger Nebenantrieb - etwa der Zapfwelle eines Schleppers - vorzusehen ist.

Ein Versuch zur Lösung dieses Problemes ist aus der DE 44 30 447 C2 bekannt. Dort wird in abwechselnden Schritten einmal die Getriebeübersetzung proportional einem Drehzahlabfall des Motors verstellt und ein andermal die Motordrehzahl bei konstantem Übersetzungsverhältnis variiert, bis die anfängliche Raddrehzahl wiederhergestellt ist. Dunkel bleibt, wie auf diese Weise eine kontinuierliche und vor allem motoroptimale und stabile Regelung erreicht werden kann. Ungelöst ist auch hier das Problem, den beispielsweise über ein Fahrpedal eingegebenen Fahrerwunsch so umzusetzen, daß das Fahrzeug ohne Zeitverzug und unvorhersehbare Reaktionen darauf anspricht.

Nicht auf stufenlose Getriebe beschränkt ist dieses Problem auch in der DE 28 11 574 angesprochen. Dort wird in einem ersten Regelkreis die Getriebeübersetzung entsprechend der geforderten Leistung nach Maßgabe eines Getriebekennfeldes eingestellt und in einem zweiten Regelkreis eine Steuergröße des Antriebsmotors in Abhängigkeit von der sich einstellenden Motordrehzahl nach Maßgabe eines Motorkennfeldes eingestellt. Bei einem stufenlosen Getriebe ist auf diese Weise die Führung des Motors in seinem optimalen Betriebsbereich und mit angenähert konstanter Motordrehzahl nur in einem engen Bereich mittlerer Last möglich, Maßnahmen gegen wechselseitige Einflüsse von Getriebe- und Motorsteuerung ("Jagen") sind nicht getroffen.

Weiters ist aus der DE-A-34 39 881 ein Verfahren zum Steuern einer Antriebseinheit bekannt, bei dem aus der Fahrpedalstellung eine Fahrzeugsollbeschleunigung berechnet wird und diese als Basis für die Steuerung eines stufenlosen Getriebes benutzt wird. Der Motor wird direkt vom Fahrpedal aus gesteuert. Schließlich ist noch aus der EP-A-424 088 ein Verfahren zum Steuern einer Antriebseinheit bekannt, bei dem eine Fahrzeugsollbeschleunigung aus einem Kennfeld abhängig von Fahrpedalstellung und Fahrzeuggeschwindigkeit berechnet wird.

Der Erfindung liegt daher die Aufgabe zugrunde, ein gattungsgemäßes Steuerungsverfahren vorzuschlagen, das alle Forderungen erfüllt: Betrieb des Motors im günstigsten Bereich, direktes und sinnfälliges Ansprechen auf den Fahrerwunsch, leichte Anpassbarkeit des Getriebes an verschiedene Anforderungen von Fahrzeug und Antriebsmotor, leichte Anpassbarkeit des Antriebsmotors an die Steuerung und weitgehend konstante Motordrehzahl für den Antrieb einer Zapfwelle. Insbesondere besteht der Betrieb des Motors im günstigsten Bereich in der Erfüllung folgender Anforderungen:

- Bester Gesamtwirkungsgrad,
- Kein Absinken der Motordrehzahl unter den jeweils als optimal definierten Betriebspunkt (z.B. Punkt mit maximaler Einspritzmenge im Falle eines RQV-Reglers)
- Kein Abwürgen des Motors bei Überlastung
- Im Bedarfsfall volle Leistungsausnützung des Motors
- Ausreichend schnelle Leistungsentfaltung des Motors bei dynamischer Anforderung (Kick down)
- Keine Beeinträchtigung der Fahrerwunschvorgaben bei Teilbelastung des Motors

Erfindungsgemäß wird das mit den Verfahrensschritten des 1. Anspruches erreicht. Obwohl die Lösung im Zusammenwirken der Gesamtheit dieser Schritte besteht, lassen sich die Wirkungen der einzelnen Schritte wie folgt erläutern:

ad a): Fahrzeugsollbeschleunigung bzw Abtriebsdrehzahlgradient werden direkt aus Fahrhebelstellung und momentaner Fahrgeschwindigkeit mittels eines Kennfeldes berechnet. Dadurch, daß zuerst direkt in ein Kennfeld einfachster Form gegangen wird, ohne Berücksichtigung motorspezifischer Optimierungen und Grenzwerte, wird unter allen Umständen ein unverfälschter Wert für die Fahrzeugsollbeschleunigung erhalten. Das ist bei den nachfolgenden Schritten ein großer Vorteil, insbesondere verbessert es das Ansprechverhalten bei Betätigung des Fahrhebels. Ausserdem kann das einfache Beschleunigungskennfeld auch im Betrieb durch ein anderes gespeichertes Kennfeld ersetzt werden.

ad b): Durch die direkte Umsetzung der Fahrzeugsollbeschleunigung in eine Getriebesollverstellung, ohne Aufteilung auf eine Getriebeverstellung und eine Motorverstellung, werden Rückwirkungen vermieden, dadurch kein Pendeln zwischen Getriebe- und Motorregelung und volle Berücksichtigung fahrdynamischer Erfordernisse. Bei Betätigung des Fahrpedales direktes Fahrgefühl, das Fahrzeug "hängt am Gas".

ad c): Die Getriebesollverstellung wird so begrenzt, daß die Motordrehzahl nicht unter einen Wert fällt, der eine Funktion der Stellung des Leistungsstellorganes des Antriebsmotors ist. Die Getriebesollverstellung wird also erst eingegrenzt, wenn sie genau vorliegt, und nicht schon vorbeugend einige Schritte vorher. Dabei sind die Grenzen rein motorbezogen. Das vermeidet die Nachteile einer Aufteilung auf eine Getriebeverstellung und eine Motorverstellung. Die Begrenzung der Getriebesollverstellung verhindert nur Änderungen der Belastung des Motors, die der Motorregelungsmodul nicht ausgleichen kann und die zu einem Hochdrehen oder Abwürgen des Motors führen könnten. Vereinfachend kann man von einer Motordrückungsregelung sprechen. Diese wird wirksam, wenn die eingestellte Getriebeübersetzung und/oder Verstellgeschwindigkeit zu hoch ist, um mit der momentan verfügbaren Motorleistung die anliegenden Fahrwiderstände zu überwinden. Die Drückungsregelung bewirkt dann eine Begrenzung bzw Rücknahme der Getriebeverstellung und damit eine Entlastung des Motors. Ausserdem kann dadurch ein Zurücknehmen der Getriebeübersetzung bei schnellem Gasgeben ("Kickdown") erzwungen werden, sodaß die Motordrehzahl der Regelstangenposition bis zum optimalen Betriebspunkt folgen kann.

ad d): Das Übersetzung des stufenlosen Getriebes wird entsprechend der begrenzten Getriebesollverstellung geändert, es wird also sozusagen auf den Motor Rücksicht genommen ohne in seine Steuerung einzugreifen. Die motorbezogene Begrenzung hat auch zur Folge, daß Änderungen der Belastung einer eventuell vorhandenen Zapfwelle ohne zusätzliche Maßnahmen voll berücksichtigt werden.

ad e): Die Berechnung der Ansteuergröße für das Leistungsstellorgan des Antriebsmotors direkt aus der Fahrhebelstellung ist dank dem Schritt c) möglich und ergibt mit diesem zusammen das schnelle Ansprechen und sinnfällige Fahrverhalten der Antriebseinheit. Sie hat den großen Vorteil, daß erstens in die Steuerung des Motors nicht direkt eingegriffen wird, sodaß in Verbindung mit konventionellen Getrieben eingesetzte Motoren ohne Änderung ihrer Steuerorgane verwendet werden können und zweitens, daß die Motorsteuerung von der Getriebesteuerung gänzlich unabhängig bleibt. Damit ist das Problem der simultanen Steuerung von Motor und stufenlosem Getriebe ohne "Jagen" oder "Pendeln" in überraschend einfacher Weise vollkommen gelöst.

Bei Einsatz der Antriebseinheit in einem Ackerschlepper kann von der Möglichkeit, wahlweise verschiedene Kennfelder abzurufen (Anspruch 1.a), zur Schaffung eines Kriechganges Gebrauch gemacht werden. Dazu erfolgt die Berechnung der Fahrzeug-Sollbeschleunigung mittels aufgrund von Befehlssignalen abgerufener weiterer Kennfelder oder Berechnungsfunktionen (Anspruch 2). Weiters kann die Möglichkeit, wahlweise verschiedene Kennfelder bzw Funktionen abzurufen, zur Realisierung einer Tempomatfunktion genutzt werden. Die Einbindung solcher Kennfelder in einem frühen Stadium des Verfahrensablaufes vereinfacht die damit verbundenen Steuermaßnahmen und das Befehlssignal zum Abruf der entsprechenden Funktion kann sinnfällig von einem Moduswählhebel aktiviert werden, mit dem auch der Kriechgang aktiviert wird.

Vorzugsweise ist der Antriebsmotor ein Dieselmotor mit einer Regelstange als Leistungsstellorgan, dann ist dessen Ansteuergröße die Sollposition der Regelstange (Anspruch 3). Die Fahrhebelstellung wird so vom Ansteuermechanismus des Dieselmotors direkt in eine Regelstangenposition übersetzt, die - im Falle eines Ackerschleppers mit RQV-Regler - im Hinblick auf möglichst geringe Drehzahlschwankung in eine Einspritzmenge umgesetzt wird. Das ergibt auch bei Verwendung eines Dieselmotors schnelles Ansprechen und sinnfälliges Fahrverhalten der Antriebseinheit.

Bei Einsatz der Antriebseinheit in einem Schlepper mit Zapfwelle wird mit Vorteil als Fahrhebel ein Fahrpedal und ein Handgas vorgesehen. In Weiterbildung des erfindungsgemäßen Verfahrens bestimmt bei aktiviertem Handgas dessen Stellung nur die Ansteuergröße für den Antriebsmotor und die Stellung des Fahrpedales nur eine Verstellung der Getriebeübersetzung (Anspruch 4). Dadurch kann mittels Fahrpedal die Fahrgeschwindigkeit allein variiert werden, bei Betätigung des Handgases Fahrgeschwindigkeit und Zapfwellendrehzahl.

Für andere Einsatzfälle ist es vorteilhaft, zur Berücksichtigung der aktuellen Drehzahl des Antriebsmotors bei der Ermittlung der Getriebesollverstellung auch den Gradienten der Drehzahl des Antriebsmotors zu berücksichtigen (Anspruch 5). Das verbessert insbesondere das Ansprechverhalten bei schnellen Straßenfahrzeugen, erfordert aber weitere Maßnahmen zur Vermeidung von Instabilitäten.

In Weiterbildung der Erfindung kann auch eine Tempomatfunktion vorgesehen sein. Bei Einschalten der Tempomatfunktion wird die momentane Geschwindigkeit des Fahrzeuges als Sollwert gespeichert und in der Folge wird die Fahrzeugsollbeschleunigung bzw der Abtriebsdrehzahlgradient als Funktion der Geschwindigkeitsabweichung berechnet und aus diesem die Getriebesollverstellung berechnet (Anspruch 6).

In Weiterbildung des erfindungsgemäßen Verfahrens kann eine Stillstandsregelung mit besonderem Vorteil dadurch erfolgen, daß nach Festlegung der Sollstillstandsposition des Fahrzeuges durch Initialisieren die Abweichung der Fahrzeugposition von der Sollstilltandsposition des Fahrzeuges durch Integration der Abtriebsdrehzahl ermittelt wird und dann aus der Abweichung von der Sollstillstandsposition des Fahrzeuges mittels einer Funktion ein Soll-Abtriebsdrehzahlgradient berechnet wird (Anspruch 7). Durch die Getriebeübersetzungsänderung wird der Integralwert auf Null geregelt. Durch Begrenzung des Integrales auf einen bestimmten Wert - der einem Weg entspricht - wird erreicht, daß bei größeren Abweichungen die Sollposition der Fahrzeugposition nachgeführt wird. Insbesondere kann dadurch vermieden werden, daß das Fahrzeug nach einer ungewollten größeren Abweichung von der ursprünglichen Sollposition wieder in diese zurückkriecht.

Die Begrenzung der Getriebesollverstellung nach Anspruch 1, Schritt c) lauft in einer vorteilhaften Ausbildung in den Schritten gemäß Anspruch 8 ab.

ad a): Die Funktion, mittels der aus der Position des Leistungsstellorganes die dem gewünschten Motorbetriebspunkt entsprechende Motordrehzahl berechnet wird, gibt die optimalen Betriebspunkte des Motors wieder, enthält also die motorbezogene Optimierung, etwa die Drehzahl maximalen Motormomentes oder minimalen Verbrauches. Sie soll nicht unterschritten werden. Es können auch verschiedene Funktionen zur Wahl stehen.

ad b): Die Regelabweichung ist somit als Differenz aus momentaner Motordrehzahl und der Motordrehzahl am optimalem Punkt bei gegebener Motoransteuergröße definiert. Es ist primäres Regelziel, das Unterschreiten der optimalen Motordrehzahl zu verhindern.

ad c): Aus dieser Regelabweichung wird anhand einer vorgegebenen Funktion ein Soll-Motordrehzahlgradient ermittelt, mit dem die Motordrehzahl zum optimalen Punkt hingeführt werden soll. Dieser Sollgradient ist das sekundäre Regelungsziel. Das hat den Vorteil, daß die Regelcharakteristik direkt hinsichtlich subjektivem Fahrgefühl angepasst werden kann. Insbesondere bei Kickdown des Fahrpedales oder bei plötzlich erhöhtem Fahrwiderstand wird durch die Kontrolle des Drehzahlgradienten eine Zugkraftunterbrechung (durch Leistungsverbrauch für die Beschleunigung des Motors) unterbunden.

ad d): Da es sekundäres Regelungsziel ist, ein Unterschreiten des Sollmotordrehzahlgradienten zu unterbinden, wird dieser zuerst aus dem Sollmotordrehzahlgradienten und dem gemessenen Motordrehzahlgradienten die Regelabweichung gebildet und daraus anhand einer Funktion eine differentielle Ableitung der Getriebesollverstellung berechnet und begrenzt. Insbesondere ist der Gradient der Motordrehzahl gleich dem Gradienten der Getriebeeingangsdrehzahl. Die Ableitung der Getriebesollverstellung entspricht einer Beschleunigungsänderung, die als Ruck wahrgenommen wird, und daher für das Fahrgefühl eine wesentliche Rolle spielt. Die direkte Begrenzung der Getriebeübersetzungsänderung reicht dazu nicht aus. Auch der Sollmotordrehzahlgradient kann (gemäß Anspruch 9) beschränkt werden.

ad e): die begrenzte Getriebesollverstellung (IGDSOLL) wird dann durch Vergleich (minimum-select) mit den Grenzwerten gewonnen. Damit können mehrere Grenzwerte berücksichtigt werden.

In Weiterentwicklung des Verfahrens nach Anspruch 8, Schritt c), ist zusätzlich eine Vorgangsgweise nach Anspruch 9 vorteilhaft, um einen zweiten Sollmotordrehzahlgradienten zu ermitteln, durch dessen Begrenzung ein Abwürgen des Motors verhindert und bei höheren Getriebeübersetzungen eine Mindestmotordrehzahl nicht unterschritten werden soll. Die Mindest-Motordrehzahl kann beispielsweise als Funktion der Getriebeübersetzung so berechnet werden, daß ab einer bestimmten Übersetzung die Mindestmotordrehzahl nicht mehr abnimmt.

Aus der Drehzahlabweichung des Motors von der Mindest-Motordrehzahl wird dann ein weiterer minimaler Motordrehzahlgradient gebildet, der für die Begrenzung der Getriebeübersetzungsänderung zur Auswahl steht.

In Verfeinerung des Verfahrens kann schließlich noch die Getriebesollverstellung bei Annäherung an die Bereichsgrenzen abgesenkt (Anspruch 10) und die Abtriebsdrehzahl aus Drehzahlen von Gliedern des Summierungsplanetengetriebes ermittelt werden (Anspruch 11)

Im Folgenden wird das erfindungsgemäße Verfahren anhand von Schemata und Diagrammen in einer beispielsweisen Ausführungsform wiedergegeben. Es stellen dar:

Fig.1:      Schema einer Fahrzeugantriebseinheit, die nach dem erfindungsgemäßen Verfahren gesteuert wird,

Fig.2:      Schema eines für das erfindungsgemäße Verfahren geeigneten speziellen Getriebes

Fig.3:      Flußschaubild des erfindungsgemäßen Verfahrens, in Tafeln A bis D,

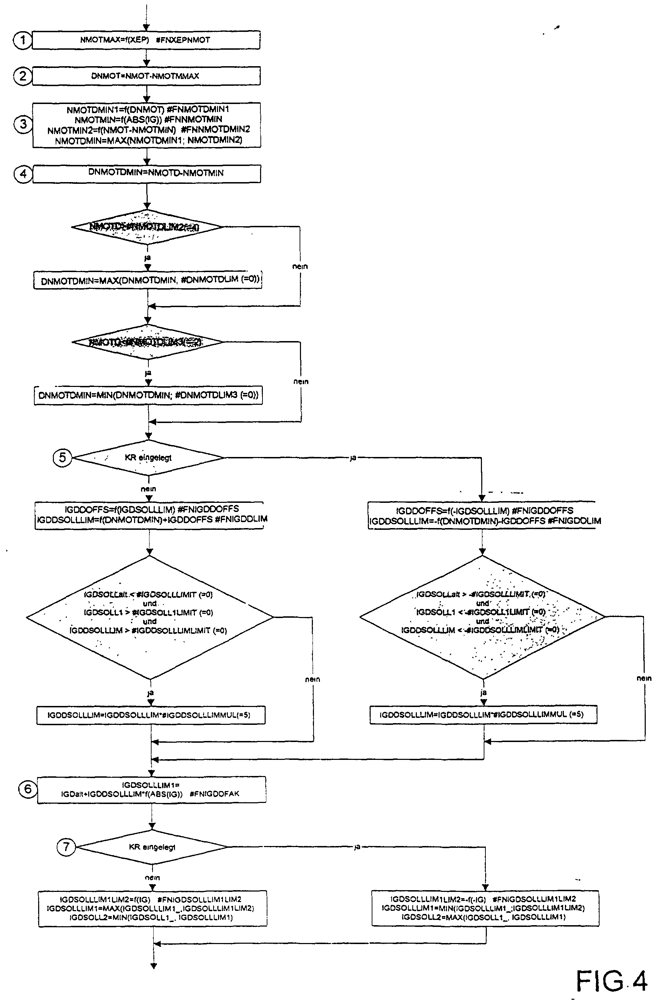

Fig.4:      Flußschaubild, Detail 3.3.2. zu Fig. 3 C,

Fig.5,6:      Diagramm zu Feld 3.2.1. in Fig.3 B,

Fig.7,8:     Diagramm zu Feld 3.2.1. in Fig.3 B für einen anderen Betriebsmodus,
Fig.9:      Diagramm zu Feld 3.3.2. in Fig.3 B, und zu Fig.4,
Fig.10:     Diagramm zu Feld 3.3.2. in Fig.3 B, und zu Fig.4,
Fig.11:     Diagramm zu Feld 3.3.2. in Fig.3 B und zu Fig.4,
Fig.12:     Diagramm zu Feld 3.3.2. in Fig.3 B, und zu Fig.4,
Fig.13:     Diagramm zu Feld 5.1. in Fig.3 D,
Fig.14:     Diagramm zu Feld 5.3. in Fig.3 D.

In Fig. ist der Motor 1 einer Fahrzeugantriebseinheit, ein Verbrennungsmotor, nur angedeutet. Er treibt über eine Getriebeeingangswelle 3 und ein stufenloses Getriebe 2 eine Abtriebswelle 4 für die nur angedeuteten Antriebsräder des Fahrzeuges und ggf auch eine Zapfwelle 5. Das Steuergerät 7, ein Computer mit gespeichertem Programm kann an beliebiger Stelle angeordnet sein. Im Führerstand 6 des Fahrzeuges befinden sich folgende Bedienungsorgane, von denen Befehlssignale für das Steuergerät erzeugt werden:

- von einem Fahrpedal 8 ein Stellungssignal XFP
- von einem Handgashebel 9 ein Stellungssignal XHG, beide entsprechend einer Last- bzw Geschwindigkeitsvorgabe,
- von einem Wählhebel 10 ein Wählsignal ("VORWÄRTS","RETOUR", "KRIECHEN", "NEUTRAL"
- von einem Tempomathebel 11 ein Tempomatsignal ("EIN", "AUS", "LB", "LV", "MEMORY")
- Weiters ggf noch weitere Signale, etwa ein Bremssignal.

In der Fahrzeugantriebseinheit sind weiters die Zustandssensoren angebracht, die Zustandssignale erzeugen und dem Steuergerät 7 liefern:

- Ein Drehzahlsensor 14 für die Eingangsdrehzahl NHA (Impulsgeber),
- Ein Drehzahlsensor 15 für die Abtriebsdrehzahlsignal NAB (Abtriebswelle 4), der ein Doppelsensor ist, um auch den Drehsinn erfassen zu können,
- einen Stellungssensor 17 für die Regelstangenstellung XEP des Antriebsmotors am Stellglied 16 des Antriebsmotors, im Falle eines Dieselmotors, im allgemeinen der Stellung des leistungsbestimmenden Gliedes,

Aus den Befehlssignalen und den Zustandsignalen berechnet das Steuergerät ein Steuersignal XEPSOLL für den Verbrennungsmotor und ein Steuersignal IGDSOLL für die Steuerung 18 des Stufenlosgetriebes. In welcher Weise die Steuerung 18 das Steuersignal für die Getriebesollübersetzung (IGDSOLL) umsetzt, hängt von der Bauweise des Stufenlosgetriebes ab.

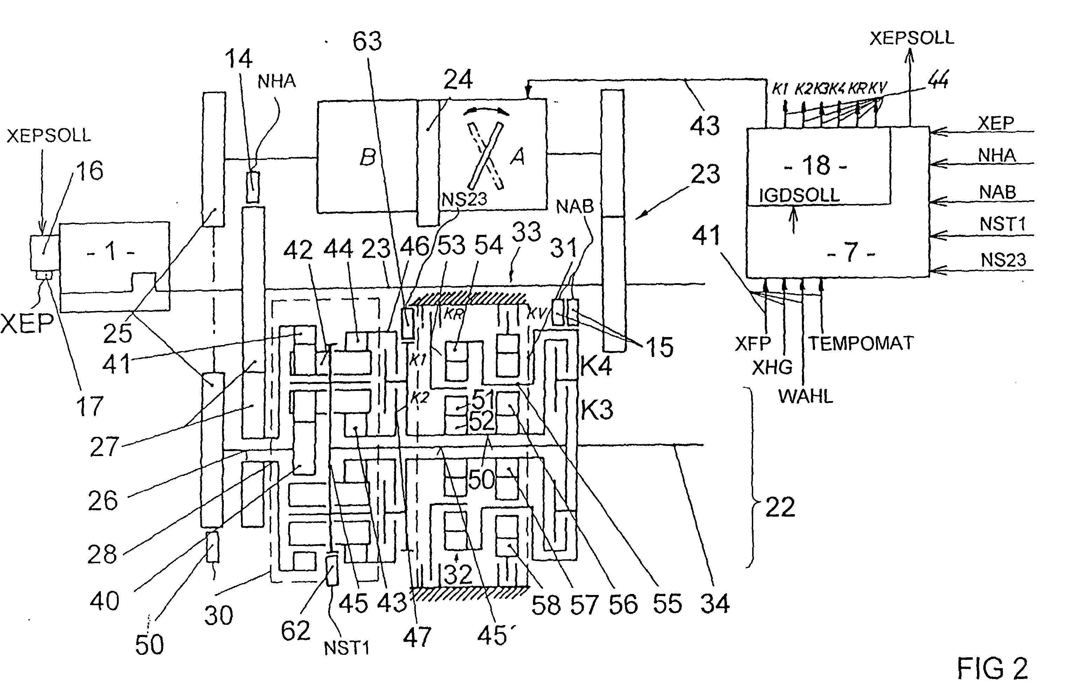

Fig.2 zeigt beispielsweise ein für das Verfahren geeignetes Stufenlosgetriebe. Es ist ein hydrostatisch-mechanisches Leistungsverzweigungsgetriebe 22. Der Verbrennungsmotor 1 treibt hier einerseits über eine erste Zahnradtransmission 23 eine steuerbare Hydrostateinheit 24, deren Ausgang über eine zweite Zahnradtransmission 25 eine erste Eingangswelle 26 antreibt. Andererseits treibt die Getriebeeingangswelle 23 über eine dritte Zahnradtransmission 27 eine zweite Eingangswelle 28. Die Hydrostateinheit 24 (im Folgenden auch als Variator bezeichnet) besteht aus zwei hydrostatischen Maschinen A,B, wovon immer eine als Motor und eine als Pumpe arbeitet. Die Drehzahl der Maschine B ist durch Verstellung der Maschine A stufenlos in beiden Drehrichtungen steuerbar.

Die beiden Eingangswellen 26,28 sind Teil eines Summierungsplanetengetriebes 30, von dem aus über Kupplungen K1,K2 ein Stufengetriebe 31 angetrieben wird, welches hier aus einer ersten Planetengetriebestufe 32 mit einer Kupplung KR und einer zweiten Planetengetriebestufe 33 mit einer Kupplung KV besteht. Über Kupplungen K3,K4 wird im dritten und vierten Fahrbereich eine Abtriebswelle 34 geschaltet, die dem Antrieb eines Fahrzeuges dient.

Das Summierungsplanetengetriebe 30 enthält eine erste Sonne 40, ein erstes Hohlrad 41 und abgestufte Planeten 42, die den ersten Planetensatz bilden. Der zweite Planetensatz besteht aus einer zweiten Sonne 43, einem Hohlrad 44 und den abgestuften Planeten 42, die beiden Sätzen gemeinsam sind. Die Planeten 42 sind auf einem Planetenträger 45 gelagert, dessen Welle die erste Ausgangswelle 45' des Summierungsplanetengetriebes 30 darstellt. Das zweite Hohlrad 44 wirkt über eine Hohlradwelle 46, die die zweite Ausgangswelle darstellt, auf die Kupplung K1. Die zweite Sonne 43 wirkt über eine Sonnenwelle 47 auf die Kupplung K2 und stellt die dritte Ausgangswelle des Summierungsplanetengetriebes 30 dar.

Die erste Stufe 32 des Stufengetriebes besteht aus einem ersten Sonnenrad 51, ersten Planetenrädern 52, einem ersten Planetenträger 53 und einem ersten Ringrad 54. Die Sonnenradwelle 50 wird wahlweise von einer der beiden Kupplungen K1, K2 angetrieben, der erste Planetenträger 53 ist mittels der Kupplung KR am stationären Gehäuse festbremsbar. Das erste Ringrad 54 ist mit einem zweiten Planetenträger 55 der zweiten Planetengetriebestufe 53 drehfest verbunden. Dessen Planetenräder 56 kämmen innen mit einem zweiten Sonnenrad 57, das mit der Sonnenradwelle 50 drehfest verbunden ist und außen mit einem zweiten Ringrad 58, welches über die Kupplung KV am Gehäuse festbremsbar ist. Die Abtriebswelle 34 ist mit dem zweiten Planetenträger 55 drehfest verbunden und über die Kupplungen K3,K4 entweder mit der Planetenträgerwelle 45 oder mit der Sonnenradwelle 50 drehfest verbindbar.

Weiters sind die Drehzahlsensoren 14,15 für die Eingangsdrehzahl NHA und die Abtriebsdrehzahl NAB sowie zwei weitere Drehzahlsensoren 62, 63 für die Drehzahl NST1 des Planetenträgers 45 des Summierungsplanetengetriebes (Stegdrehzahl) 30 und für die Drehzahl NS23 der Sonnenradwelle 50 des Bereichsgetriebes vorgesehen. Alle diese Drehzahlsignale werden wieder dem Steuergerät 7 zugeführt.

Das beschriebene Getriebe ist nur ein Ausführungsbeispiel. Es kann sich um ein beliebiges stufenlos bzw kontinuierlich verstellbares Getriebe handeln. Insbesondere kann im Falle eines hydrostatisch-mechanischen Leistungsverzweigungsgetriebes die Anordnung und Bauweise von Variator, Summierungsgetriebe, Kupplungen und Bereichsgetrieben in weiten Grenzen abgewandelt werden.

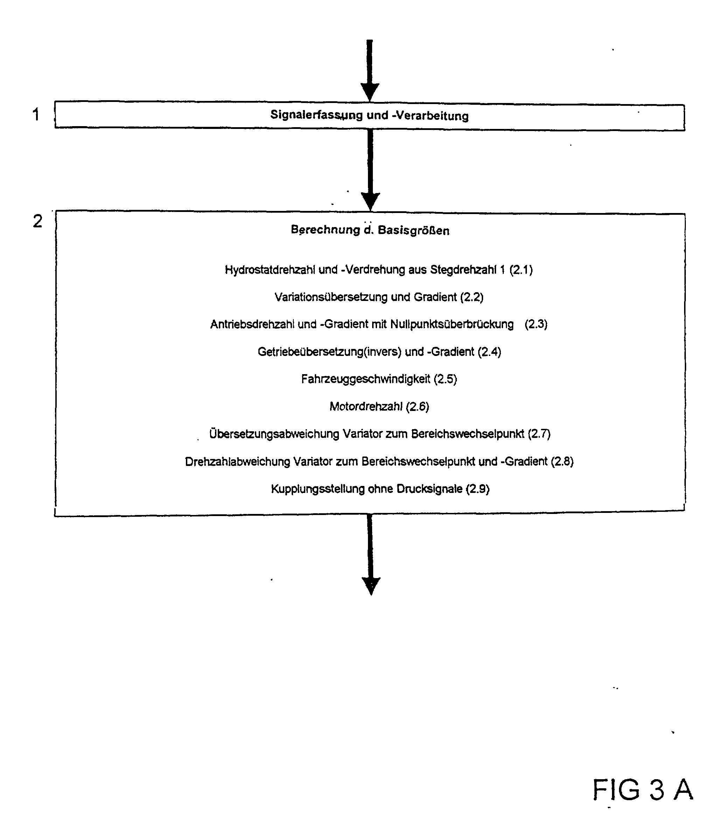

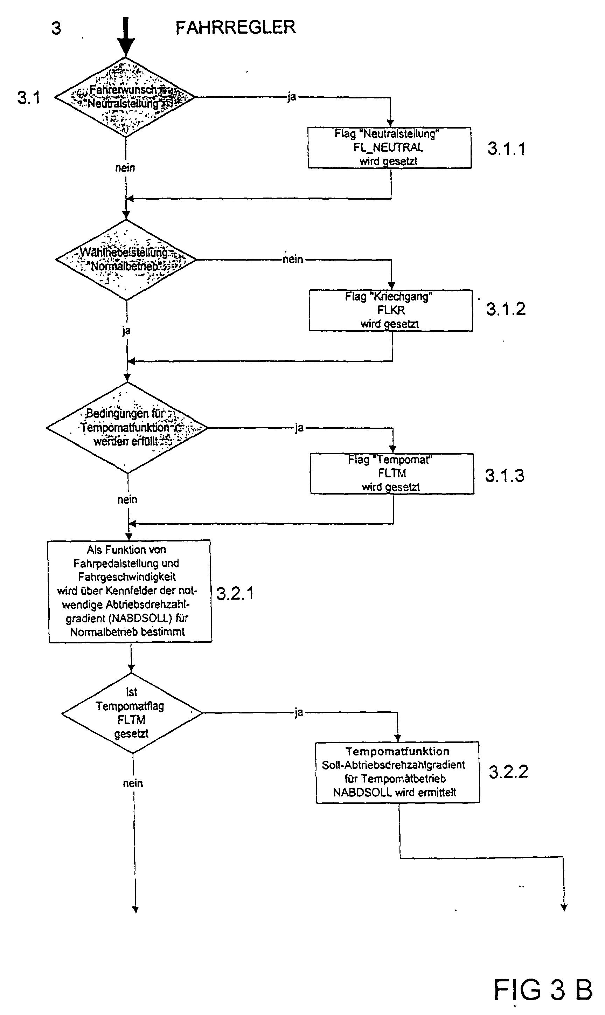

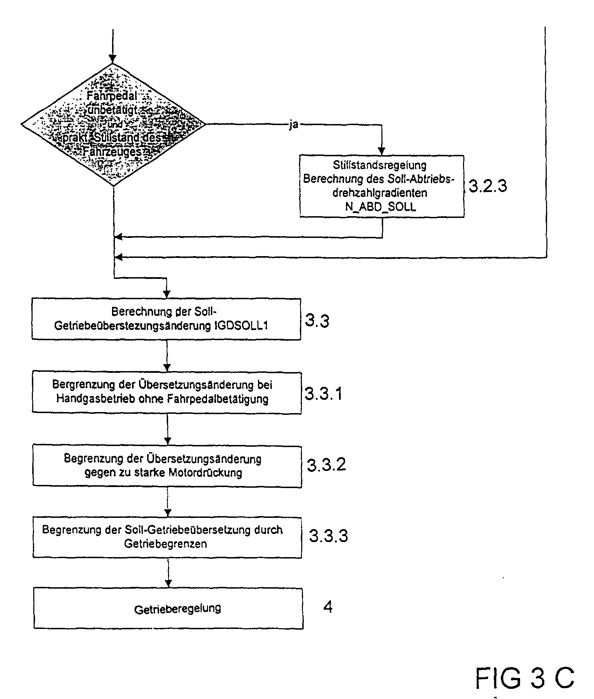

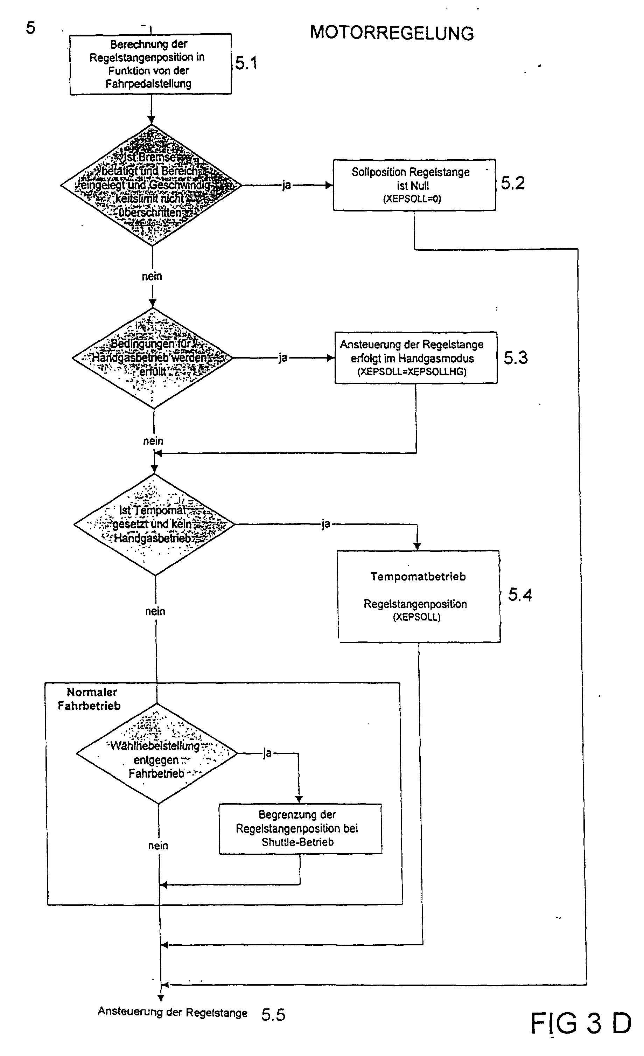

In Fig.3 sind die Verfahrensschritte in Blocks zusammengefasst, deren Bezeichnung mit der Numerierung der folgenden Überschriften übereinstimmt, unter denen die einzelnen Schritte - soferne für das erfindungsgemäße Verfahren wesentlich - beschrieben sind, wobei der Bezeichnung geeignet gewählter Funktionen bzw Kennfelder ein # vorangesetzt ist.

### 1. Signalerfassung und -verarbeitung

In den Softwaremoduln für Signalerfassung und -Verarbeitung werden aus den digitalen und analogen Eingangssignalen die erforderlichen Eingangsgrößen für den Regler in physikalischen Einheiten berechnet. Signalfilterung, die Berechnung von Signalgradienten und Gradientenbegrenzung werden, soweit erforderlich, auch hier durchgeführt. Die verwendeten Logikfunktionen zur Signalerfassung entsprechen dem Stand der Technik und werden daher im folgenden nicht vollständig angeführt.

### 2. Berechnung der Basisgrößen

### 2.1. Hydrostat- Drehzahl und -Verdrehung aus Stegdrehzahl NST1

Hydrostatdrehzahl NHYDST1:

$$NHYDST1 = (NST1 - \#NST1OFFSET*NHA)*\#KST1$$

### 2.2. Variatorübersetzung IV und deren Gradient IVD

Die Variatorübersetzung IV wird als Verhältnis von Hydrostatdrehzahl NHYDST1 und Eingangsdrehzahl NHA berechnet.

$$IV = NHYDST1/NHA$$

### 2.3. Abtriebsdrehzahl NAB und -Gradient mit Nullpunktsüberbrückung

Bei Abtriebsdrehzahlen NAB nahe der meßbaren Mindestdrehzahl und eingelegtem langsamsten Bereich (V1 oder R1), wird die Abtriebsdrehzahl NAB1 aus der Stegdrehzahl NST1 und der Hohlraddrehzahl NHA berechnet, um einen stetigen Signalverlauf bis NAB gleich 0 zu erhalten, was etwa für die Stillstandsregelung nötig ist.

Wenn ABS(NAB) kleiner #NABMIN1 und K1 geschlossen (Bereich V1 od. R1), wobei KVIGA, KVIGB, KRIGA und KRIGB aus den Zähnezahlen des Getriebes entsprechend berechnet werden, ist:

Wenn KV geschlossen (Bereich V1):
$$NAB1 = \#KVIGA * NST1 + \#KVIGB * NHA$$

Wenn KR geschlossen (Bereich VR):
$$NAB1 = \#KRIGA * NST1 + \#KRIGB* NHA$$

Wenn weder KV noch KR geschlossen::
$$NAB1 = NAB$$

### 2.4. Getriebeübersetzung IG und -Gradient IGD

Die Getriebeübersetzung IG wird allgemein als Verhältnis der Abtriebsdrehzahl NAB1 1 und der Eingangsdrehzahl NHA gebildet. Sie ist somit invers, um bei eingelegtem Getriebebereich einen stetigen Verlauf bis auf Null zu erhalten.

IG = NAB1/NHA

### 2.5. Fahrzeuggeschwindigkeit

$$VFZ = NAB1/\#IHAV \ (Km/h) \qquad \#IHAV = \frac{30*1000}{R_h*Pi*3,6*i_{HA}}$$

wobei #IHAV das von geometrischen Größen abhängige Verhältnis zwischen Abtriebsdrehzahl und Fahrgeschwindigkeit ist.

### 2.6. Motordrehzahl

$$NMOT = NHA*39/49 \qquad N_{MOT} = N_{HA} * \frac{z_2}{z_1}$$

### 2.7. Übersetzungsabweichung Variator zum Bereichswechselpunkt

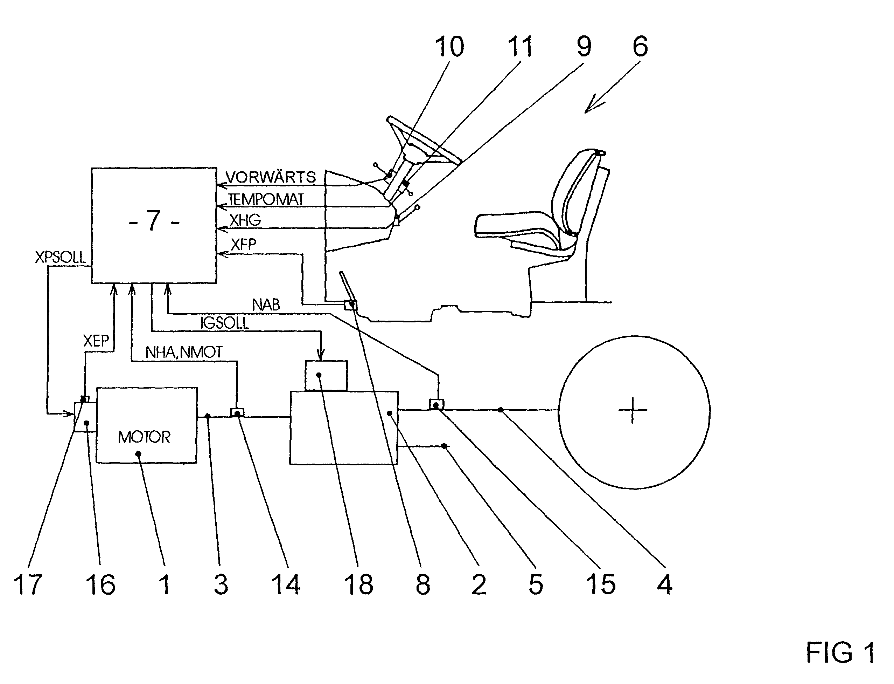

Diese Übersetzungsabweichung wird beim Getriebe gemäß Fig. 1 als Kriterium für das Schalten der Kupplung K3 verwendet.

Wenn IV größer gleich 0:
  DIVSYN = 1 - IV

Wenn IV kleiner oder gleich 0:
  Wenn IG kleiner 0.5:
    DIVSYN = -1,023256 - IV
  Wenn IG größer oder gleich 0.5:
    DIVSYN = -1,021600 - IV

### 2.8. Drehzahlabweichung Variator zum Bereichswechselpunkt und - Gradient

Diese Drehzahlabweichung wird beim Getriebe gemäß Fig. 1 bei der Bereichsschaltung als Kriterium für Schalten der Kupplung für den neuen Bereich verwendet.

$$DNSYN = ABS(DIVSYN)* \ NHA$$

$$DNSYND = DNSYN - DNSYNalt,$$

gefiltert mit #FCDNSYND

### 2.9. Kupplungsstellung XK ohne Drucksignale

Wenn auf Kupplungsdruckgeber verzichtet werden soll, erfolgt die Erkennung der Kupplungsstellung KUST auf Basis der Kupplungsansteuerung KUSTSOLL und der berechneten Verdrehung DNIKx an den einzelnen Kupplungen x.

Berechnung der Kupplungsstellung KUSTOD:

Wenn Kx-bit in KUSTSOLL gesetzt:

```
XKx = XKxalt + #VKXEIN
Wenn XKx größer gleich #XKXMAX:
        XKx = #XKXMAX
        Wenn ABS(DNIKx) kleiner #DMKxLIM1:
                Kx-Bit in KUSTOD setzen

Wenn Kx-bit in KUSTSOLL gelöscht:
        XKx = XKxalt - #VKXAUS
        Wenn XKx kleiner gleich 0:
                XKx=0
                Wenn ABS(DNIKx) größer #DNIKxLIM2:
                        Kx-Bit in KUSTOD löschen
```

### 3. Fahrregelungsmodul

Durch den Fahrregelungsmodul wird aus dem Fahrerwunsch (Stellung des Handgases und/oder des Fahrpedales und/oder des Wählhebels) die entsprechende Getriebe-Übersetzungsänderung als Eingangsgröße IGDSOLL für den Getrieberegelungsmodul berechnet. Um ein stetiges Einsetzen der Getriebeverstellung nach dem Einlegen eines Getriebebereiches zu gewährleisten, wird der Fahrregelungsmodul mit jener Übersetzungsänderung initialisiert, die dem momentanen Bewegungszustand des (frei rollenden) Fahrzeuges entspricht.

### 3.1. Fahrerwunscherkennung

#### 3.1.1.Fahrerwunsch "Neutralstellung"

Bei Betätigung des Neutralschalters (während einer bestimmten Zeit TNEUTRAL in Programmzyklen) wird unter folgenden Bedingungen das Flag FLNEUTRAL gesetzt, wodurch im Getrieberegelungsmodul (3.2, siehe dort) die Trennung der geeigneten Kupplung eingeleitet wird.

```
Wenn (TNEUTRAL größer #TNEUTRAL1          und
        Abs(NAB1) größer #NAB1NEUTRAL)          oder
        TNEUTRAL größer #TNEUTRAL2:
                Flag FLNEUTRAL wird gesetzt

Wenn diese Bedingung nicht erfüllt ist:
                Flag FLNEUTRAL wird gelöscht
```

#### 3.1.2. Fahrerwunsch "Kriechen"

Die Kriechfunktion wird bei Bewegen des Wählhebels auf "KRIECHEN"über das Flag FLKR gesteuert.

```
Wenn Wählhebelstellung "Normalbetrieb":
        Wenn FLKR gesetzt und XFP kleiner #XFPKRLIM:
                FLKR = 0

Wenn Wählhebelstellung "Kriechbetrieb":
                FLKR = 1
```

Durch die Abfrage der Fahrpedalstellung soll vermieden werden, daß das Fahrzeug unerwartet beschleunigt, wenn während des Kriechens versehentlich der Wählhebel auf Normalfahrt gestellt wird.

#### 3.1.3.Fahrerwunsch "Tempomat"

Die Tempomatfunktion wird durch betätigen des Tempomatschalters für eine bestimmte Zeitdauer (t) über das Flag FLTM gesteuert.

```
Wenn Tempomatschalter auf "AUS" oder die Bremse betätigt für t größer #TTM2LIM:
        FLTM = 0
```

Wenn Tempomatschalter für t größer #TTM1LIM auf "EIN", "LV", "LB" oder "MEMORY" :
  FLTM = 1

Wenn FLTM = 1  und
(Wählhebelstellung "retour" und VSOLLTM größer 0)  oder
(Wählhebelstellung "vorwärts" und VSOLLTM kleiner 0)):
  FLTM = 0

**3.2. Berechnung Fahrzeug-Sollbeschl. und Soll-Abtriebsdrehzahlgradient**

3.2.1. Normaler Fahrbetrieb

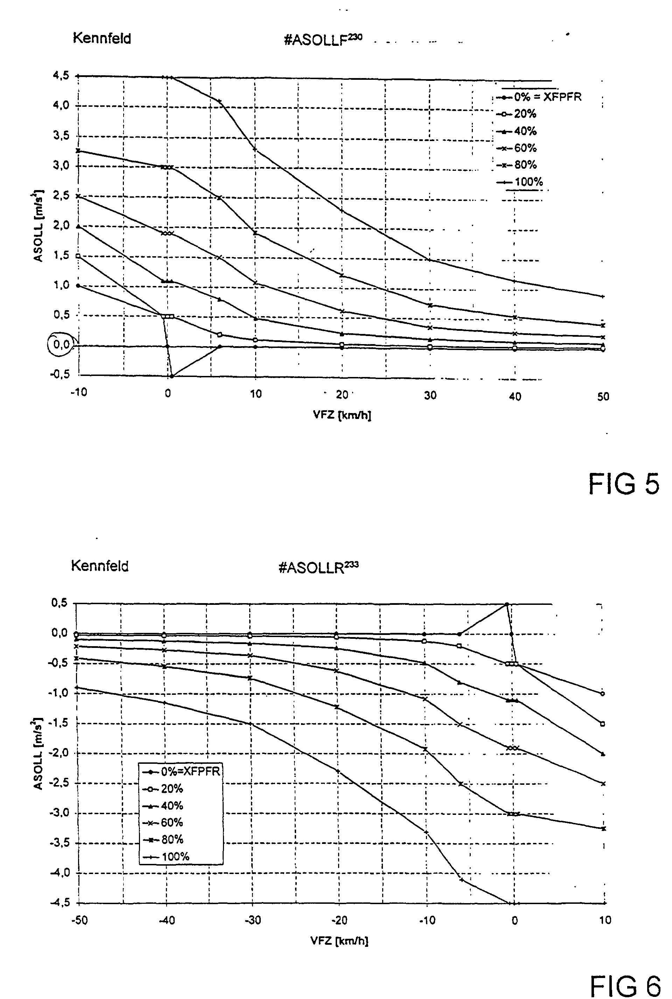

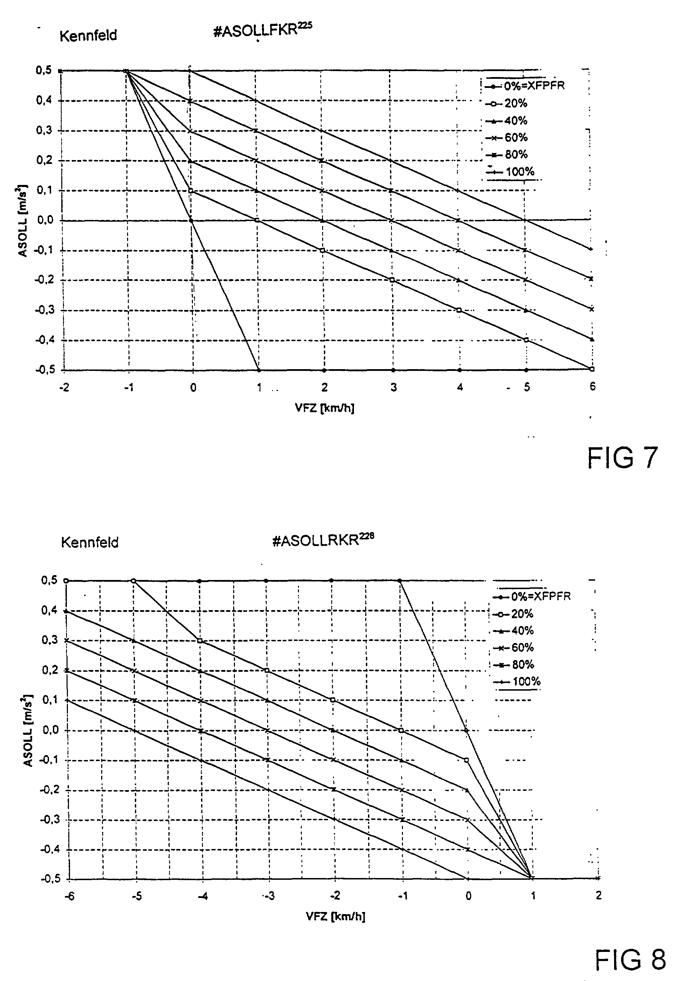

Bei normalem Fahrbetrieb wird der Fahrerwunsch über das Fahrpedal 8 vermittelt. Die Fahrzeug-Sollbeschleunigung ASOLL wird in Funktion von Fahrpedalstellung XFP und Fahrgeschwindigkeit VFZ durch lineare Interpolation aus gespeicherten Kennfeldern #ASOLLx (siehe Fig. 5,6,7 oder 8) berechnet. Die Funktionswerte der Kennfelder werden dabei mittels Stützstellenfünktionen #FTx den Eingangsgrößen zugeordnet. Abhängig von der Wählhebelstellung ("VORWÄRTS" oder "RETOUR") und ggf dem Fahrerwunsch Kriechen (FLKR) wird auf eines der vier verschiedene Kennfelder (Fig. 5,6,7 oder 8) zugegriffen:
  ASOLL = f(XFPFR, VFZ)
Wenn FLKR nicht gesetzt:

| Wenn Wahlhebel auf "vorwärts": Kennfeld | #ASOLLF | siehe Fig.5 |
|---|---|---|
| Wenn Wahlhebel auf "retour": Kennfeld | #ASOLLR | siehe Fig.6 |
| Wenn FLKR gesetzt: | | |
| Wenn Wahlhebel auf "vorwärts": Kennfeld | #ASOLLFKR | siehe Fig.7 |
| Wenn Wahlhebel auf "retour": Kennfeld | #ASOLLRKR | siehe Fig.8 |

Aus der jeweiligen Sollbeschleunigung ASOLL ergibt sich der notwendige Abtriebsdrehzahlgradient NABDSOLL für Normalbetrieb:
  NABDSOLL = ASOLL / #NABDKONST
#NABDKONST ist eine geeignet gewählte Konstante, die das Verhältnis zwischen dem momentanen Drehzahlgradienten und der Fahrzeugbeschleunigung ausdrückt.

3.2.2. Tempomatfunktion

Ist das Tempomat-Flag FLTM noch nicht gesetzt, so wird die Tempomat-Sollgeschwindigkeit VSOLLTM laufend mit der momentanen Fahrgeschwindigkeit VFZ initialisiert und zu 3.2.3 verzweigt:

Wenn FLTM nicht gesetzt:
  VSOLLTM = VFZ

Wenn das Tempomat-Flag FLTM gesetzt ist, wird eine fallweise gesetzte Stillstandsregelung gelöscht und die Fahrzeug-Sollgeschwindigkeit VSOLLTM und - Sollbeschleunigung ASOLLTM nach folgenden Funktionen berechnet:

Wenn FLTM gesetzt:
  FLST = 0 (Löschen Stillstandsregelung 3.2.3)
  Variable Sollbeschleunigung bei LV/LB:
  ASOLLLB = f(VFZ)  #FNASOLLLB
  Wenn LV-Taster betätigt (langsame Verzögerung):
   VSOLLTM = VFZ
   Wenn KR geschaltet (Retourfahrt):
    ASOLLTM = ASOLLLB
   Wenn KV geschaltet (Vorwärtsfahrt):
    ASOLLTM = -ASOLLLB
  Wenn LB-Taster betätigt (langsame Beschleunigung):
   VSOLLTM = VFZ

Wenn KR geschaltet (Retourfahrt):
ASOLLTM = -ASOLLLB
Wenn KV geschaltet (Vorwärtsfahrt):
ASOLLTM = ASOLLLB
Wenn LB-Taster und LV-Taster nicht betätigt:
Wenn Tempomat "MEMORY" betätigt:
VSOLLTM = VSOLLTMMEM
Wenn Tempomatschalter auf "EIN" für t größer #TTM1LIM:
VSOLLTM = VFZ

Die Sollbeschleunigung wird in diesen Fällen als Funktion der Geschwindigkeitsabweichung berechnet:
ASOLLTM = f(VSOLLTM - VFZ)     #FNASOLLTM, in einem bestimmten Bereich (+- 1o km/h) lineare Funktion (z.B.)
Aktualisierung des Tempomat-Memo-Wertes:
VSOLLTMMEM = VSOLLTM

3.2.3. Stillstandsregelung

Ziel der Stillstandsregelung ist es, bei eingelegtem langsamsten Getriebebereich V1 od. R1 und nicht betätigtem Fahrpedal eine einmal erreichte Stillstandsposition des Fahrzeuges zu halten . Die Stillstandsregelung beginnt, wenn das Fahrpedal unbetätigt ist und praktisch Stillstand des Fahrzeugs erreicht ist:

Wenn FLST = 0     und
wenn XFPFR kleiner gleich #XFPLIM     und
wenn (Abs(NAB1) kleiner gleich #NAB1LIM     oder
Sign(NAB1) ungleich Sign(NAB1alt):
FLST = 1 und
NABI = 0 (Initialisierung der Positionsberechnung und damit Festlegung der Sollposition, siehe weiter unten)

Die Stillstandsregelung wird verlassen, wenn das Fahrpedal betätigt wird:
Wenn XFPFR größer #XFPLIM1:
FLST = 0
Ist das Stillstands-Flag FLST gesetzt, so werden folgende Funktionen zur Berechnung des notwendigen Abtriebsdrehzahlgradienten durchlaufen:

Berechnung der Abweichung von der Sollposition:

Die Abweichung von der Sollposition 0 wird durch Integration der Abtriebsdrehzahl berechnet. Das Integral wird mit einem Wert entsprechend ca. 10 cm Fahrtstrecke begrenzt. Dadurch kann die Sollposition nur um maximal diesen Wert von der Istposition des Fahrzeuges abweichen ("Vergessen" der ursprünglichen Soll-position) und es wird vermieden, daß das Fahrzeug nach einer ungewollten großen Abweichung von der ursprünglichen Sollposition (z.B. Überlastung des Variators) wieder zu dieser zurückkehrt.
Wenn FLST = 1:
NABI = NABIalt + NAB1, betragsmäßig begrenzt mit #NABILIM

Berechnung des Soll-Abtriebsdrehzahlgradienten:

Der Abtriebsdrehzahlgradient wird in Funktion der Positionsabweichung und der Abtriebsdrehzahl selbst berechnet (Reglerfunktion):
NABDSOLL = $f_1$(NAB1) + $f_2$(NAB1)
$f_1$ = #FNNABDSOLL und
$f_2$= #FNNABDSOLL1 sind geeignet gewählte Funktionen.
Bei Erreichen einer Abtriebsdrehzahl entsprechend ca 1 cm/sec wird der Abtriebsdrehzahlgradient begrenzt, um Reglerschwingungen zu vermindern.
Wenn (NAB1 größer #NAB1STR und NABDSOLL größer 0)     oder
Wenn (NAB1 kleiner -#NAB1STR und NABDSOLL kleiner 0):
NABDSOLL = 0

**3.3. Berechnung der Soll-Getriebeübersetzungsänderung**

Eine erste, dem Soll-Abtriebsdrehzahlgradienten entsprechende Soll-Getriebeübersetzungsänderung wird unter Berücksichtigung der Eingangsdrehzahl berechnet. Die an sich notwendige Berücksichtigung des Eingangsdrehzahlgradienten NHAD kann im Algorithmus vorgesehen sein, hat sich wegen der möglichen Anregung von Schwingungen jedoch als problematisch erwiesen; sie kann teilweise oder ganz ausgeschaltet werden. Außerdem wird die Eingangsdrehzahl NHA für diese Berechnung nach unten mit 1000 U/Min limitiert, um zu hohe Getriebeverstellungen bei niedriger Motordrehzahl zu vermeiden.

IGDSOLL1 = (NABDSOLL - NHAD*IG)/NHA

Zur Berücksichtigung verschiedener Betriebszustände und Systemgrenzen wird im folgenden die Übersetzungsänderung IGDSOLL1 verschiedenen Einschränkungen unterworfen.

3.3.1 Übersetzungsänderung bei Handgas- ohne Fahrpedalbetätigung

Bei Handgasbetrieb oder Motordrehzahl nahe Leerlauf und Fahrpedalstellung praktisch null wird eine Mindest-Rückschaltgeschwindigkeit des Getriebes erzwungen, um ein Verzögern des Fahrzeuges ohne Bremsbetätigung zu ermöglichen. Diese Logik stellt eine vereinfachte Lösung dar, sie könnte auch durch eigene Beschleunigungskennfelder für Handgasbetrieb ersetzt werden.

Wenn FLTM nicht gesetzt        und

wenn (FLHG = 1 oder NMOT kleiner 850)        und

wenn XFP kleiner #XFPHGLIM:

Wenn IG größer +0.1 (Vorwärtsfahrt):

IGDSOLL1 = MIN (IGDSOLL1 ; #IGDMAXHG)

Wenn IG kleiner -0.1 (Retourfahrt):

IGDSOLL1 = MAX (IGDSOLL1 ; -#IGDMAXHG)

3.3.2. Begrenzung hinsichtlich Motordrückung

Unter Motordrückung wird das Absinken der Drehzahl des Motors bei steigender Belastung verstanden. Bei einem Dieselmotor mit RQV-Regler reagiert der motoreigene Regler darauf mitErhöhung der Einspritzmenge. Dieser Funktionsmodul ist, wie in Fig.3 genauer dargestellt, aus folgenden Funktionsuntermoduln aufgebaut:

3.3.2.1. Berechnung des optimalen Motor-Betriebspunktes (Solldrehzahl)

Der gewünschte Motor-Betriebspunkt (Motordrehzahl) wird in Funktion der Regelstangenposition berechnet.

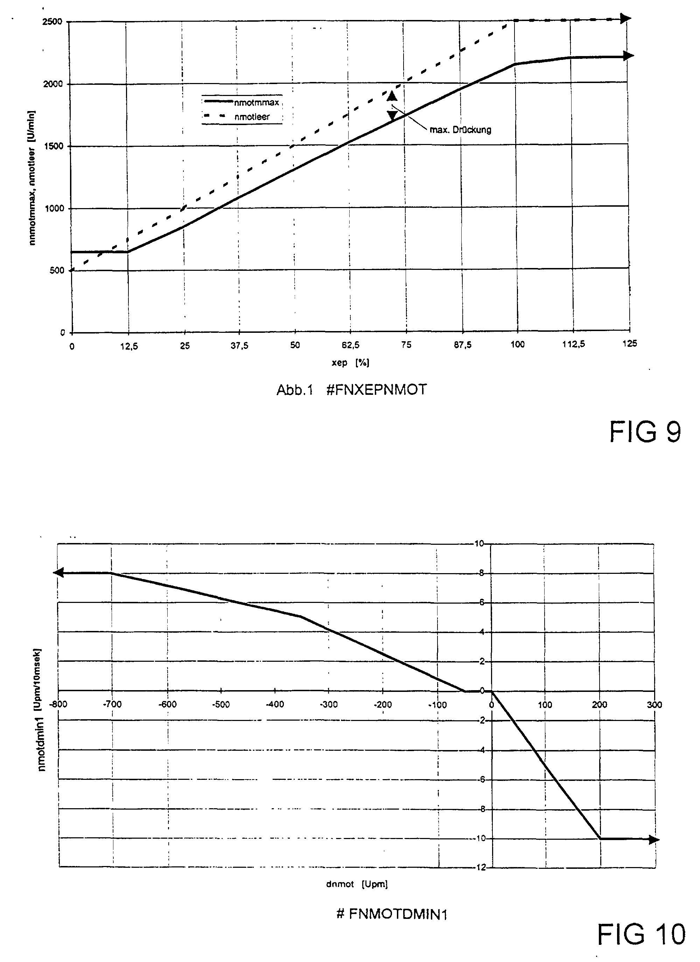

NMOTMMAX = f(XEP)        f = #FNXEPNMOT siehe Fig.9:

Die Funktionswerte sollen etwa den Betriebspunkten mit maximaler Einspritzmenge entsprechen; niedrigere Drehzahlen senken die verfügbare Motorleistung, höhere steigern zusätzlich den Treibstoffverbrauch. Für volle Leistungsausbeute oder Zapfwellen-Betrieb sind allerdings leicht erhöhte Werte vorteilhaft (siehe Motorkennfeld). Dem könnte durch unterschiedliche Kennlinien je nach Betriebsart Rechnung getragen werden (z.B. ECO, POWER, PTO, schaltbar durch ein zusätzliches Bedienelement oder je nach Betriebsart).

3.3.2.2. Berechnung der Drehzahlabweichung (Regelabweichung)

Primäres Regelungsziel des Drückungsregelungsmodules ist es, das Unterschreiten der optimalen Motordrehzahl zu verhindern. Deshalb wird die Regelabweichung als Differenz der Motordrehzahl vom optimalen Punkt definiert.

Abweichung der Motordrehzahl vom optimalenPunkt:

DNMOT = NMOT - NMOTMMAX

3.3.2.3. Berechnung des Soll-Motordrehzahlgradienten zum Erreichen der Solldrehzahl

Aus der Motordrehzahl-Regelabweichung DNMOT wird ein Soll- Motordrehzahlgradient (entspricht dem Getriebeeingangsdrehzahlgradienten) berechnet, mittels dem die Motordrehzahl zum optimalen Punkt hingeführt werden soll. Dieser Sollgradient ist sekundäres Regelungsziel des Drückungsregelungsmodul mit dem Vorteil, daß die Regelcharakteristik direkt hinsichtlich subjektivem Fahrgefühl angepasst werden kann. Insbesondere bei Kick-down-Rückschaltung oder Rückschaltung aufgrund plötzlich erhöhtem Fahrwiderstand ( z.B. Übergang Ebene-Steigung) ist die Kontrolle des Drehzahlgradienten unumgänglich, um z.B. Zugkraftunterbrechungen zu vermeiden (Begrenzung der für Motorhochlauf eingesetzten Leistung).

Mindest-Soll-Motordrehzahlgradient, den der Regler einhalten soll:

NMOTDMIN1 = f(DNMOT)          f= #FNNMOTDMIN1 siehe Fig. 10

Die Funktionswerte müssen der Motorcharakteristik (Moment, Massenträgheit) und dem Kundengeschmack angepasst sein. Analog zu obigen Schritten 1-3 wird ein zweiter Soll-Motordrehzahlgradient ermittelt, mittels dem das Abwürgen des Motors und bei höheren Getriebeübersetzungen das Unterschreiten einer Mindest-Motordrehzahl verhindert werden soll. Zur Einhaltung dieser Mindestdrehzahl kann damit eine eigene Regelcharakteristik (im Bedarfsfall schnellere Getrieberückschaltung) realisiert werden.

Mindest-Motordrehzahl:

Sie wird als Funktion der Fahrzeuggeschwindigkeit VFZ oder der Getriebeübersetzung IG vorgegeben. Im letzteren Fall:

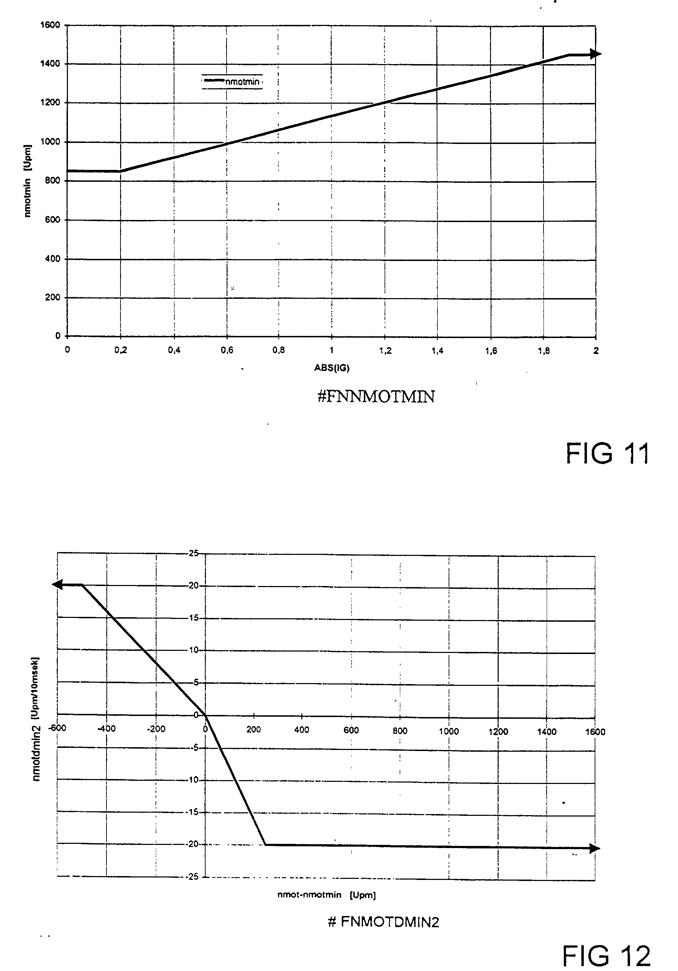

NMOTMIN = f(ABS(IG))          f = #FNNMOTMIN siehe Fig.11

Daraus wird der Soll-Motordrehzahlgradient zur Einhaltung der Mindestdrehzahl in Funktion der Drehzahlabweichung berechnet:

NMOTDMIN2 = f(NMOT - NMOTMIN)          f = #FNNMOTDMIN2 siehe Fig.11

Resultierender Soll-Motordrehzahlgradient:

Berechnung als Maximum der Sollgradienten zur Einhaltung von optimalem Betriebspunkt und Mindestdrehzahl. Damit können in weiterer Folge durch Regelung dieses einen Sollgradienten beide Regelungsziele erreicht werden.

NMOTDMIN = MAX(NMOTDMIN1 ; NMOTDMIN2)

3.3.2.4. Berechnung der Motordrehzahlgradientenabweichung

Sekundäres Regelungsziel des Drückungsregler ist es, das Unterschreiten des Soll-Eingangsdrehzahlgradienten zu verhindern. Deshalb wird die Gradienten-Regelabweichung als Differenz zwischen dem Motordrehzahlgradienten und dem Sollwert NMOTDMIN definiert.

DNMOTDMIN = NMOTD - NMOTDMIN

Um bei dynamischen Betriebszuständen (hohe Motordrehzahl-Gradienten) Regelschwingungen zu verhindern, wird diese Regelabweichung folgenden Beschränkungen unterworfen:

Bei Hochlaufen des Motors mit einem Gradienten größer als #NMOTDLIM2 = 4 Upm/Rechenzyklus (entspricht 318.5 Upm/sek, gewählter Abstimmungsfaktor) wird die Regelabweichung mit 0 nach unten limitiert. Dadurch wird in weiterer Folge die Rücknahme der Getriebeverstellung eingeschränkt und insbesondere ein zu starkes Rückschalten bei Kick-down (Kick-down-Loch) vermieden.

Wenn NMOTD größer #NMOTDLIM2 (=4, Motor läuft ausreichend schnell hoch):

DNMOTDMIN = MAX(DNMOTDMIN; #DNMOTDLIM =0)

Ebenso wird bei zu schneller Drehzahldrückung des Motors (Drehzahlabfall z.B. größer 160 Upm/sek) die Regelabweichung mit 0 nach oben begrenzt, um ein zu schnelles Hochschalten des Getriebes zu verhindern.

Wenn NMOTD kleiner #NMOTDLIM3 (= -2 ,Motor wird zu schnell verzögert):

DNMOTDMIN = MIN(DNMOTDMIN; #DNMOTDLIM3 =0)

3.3.2.5. Berechnung des Grenzwertes für die Ableitung der Getriebesollverstellung

Durch die Beschränkung der dem Fahrerwunsch entsprechenden Getriebeverstellung soll vermieden werden, daß obige Gradienten-Regelabweichung negativ wird (d.h. daß der Motordrehzahlgradient gemäß 3.3.3.3. kleiner wird als zum Erreichen und Halten der Solldrehzahl gemäß 3.3.3.1.notwendig ist)

Die direkte Begrenzung der Getriebeübersetzungsänderung in Funktion der Regelabweichung ist dabei nicht zielführend, weil damit nur die Fahrzeugbeschleunigung beeinflußbar ist. Für das subjektive Fahrgefühl spielt jedoch die Beschleunigungsänderung (der Ruck) die weitaus größere Rolle. Deshalb wird in Funktion der Regelabweichung ein Grenzwert der Ableitung der Getriebesollverstellung vorgegeben (#FNIGDDLIM).

Dem Funktionswert wird dabei noch ein Offsetwert zugeschlagen, der in Funktion der vom Getrieberegelungsmodul aktuell eingestellten Übersetzungsänderung berechnet wird (#FNIGDDOFFS). Der Offsetwert bewirkt ein über die Funktionswerte steuerbares Konvergieren der Getriebeübersetzungsänderung gegen 0.

Dies ist zur Stabilisierung des Regelvorganges notwendig, da jede Übersetzungsänderung eine Belastungsänderung für den Motor bewirkt und somit ein stabiler Betriebspunkt nur bei abnehmendem Betrag der Übersetzungsänderung möglich ist.

Durch die Beschränkung der Ableitung der Getriebesollverstellung können Verzögerungen im Ansprechverhalten des Fahrzeuges bei Beschleunigungswunsch entstehen, wenn vorher ein Verzögerungswunsch (neg. IGD_SOLL1) vorhanden ist. Um diese Verzögerung zu mildern, wird obige Ableitung mittels des Multiplikationsfaktors #IGDDSOLLLIMMUL (= 5) erhöht, wenn das Getriebe zurückschaltet (IGDSOLLalt kleiner 0), Fahrerwunsch und Motordrückung jedoch ein Hochschalten erlauben (IGDSOLL1 größer 0 und obige 2. Ableitung größer 0). Dadurch wird der Übergang von Rück- auf Hochschalten beschleunigt. Obige Ausführungen beziehen sich auf Vorwärtsfahrt; für Retourfahrt sind Hoch- und Rückschaltung sinngemäß zu vertauschen.

Zulässiger Gradient für Übersetzungsänderung (2. Ableitung IG):

Wenn KR nicht eingelegt (Vorwärtsfahrt):
IGDDOFFS = f(IGDSOLLLIM)        f= #FNIGDDOFFS (Abb. 5)
IGDDSOLLLIM = f(DNHADMIN) + IGDDOFFS        f = #FNIGDDLIM (Abb. 6)
Wenn IGDSOLLalt kleiner #IGDSOLLLIMIT (=0)        und
wenn IGDSOLL1 größer #IGDSOLL1LIMIT (=0)        und
wenn IGDDSOLLLIM größer #IGDDSOLLLIMLIMIT (=0):
IGDDSOLLLIM = IGDDSOLLLIM*#IGDDSOLLLIMMUL (=5)
Wenn KR eingelegt (Retourfahrt):
IGDDOFFS = f(-IGDSOLLLIM)        f = #FNIGDDOFFS (Abb. 5)
IGDDSOLLLIM = - f(DNHADMIN) - IGDDOFFS #FNIGDDLIM (Abb. 6)
Wenn IGDSOLLalt größer - #IGDSOLLLIMIT (=0)        und
wenn IGDSOLL1 kleiner -#IGDSOLL1LIMIT (=0)        und
wenn GDDSOLLLIM kleiner -#IGDDSOLLLIMLIMIT (=0):
IGDDSOLLLIM = IGDDSOLLLIM*#IGDDSOLLLIMMUL (=5)

3.3.2.6. Berechnung des Grenzwertes für die Getriebeverstellung

Zur Berechnung des Grenzwertes für die Übersetzungsänderung wird die Ableitung der Getriebeverstellung zur Soll-Übersetzungsänderung des vorhergehenden Programmzyklus addiert (Integration des Gradienten). Dabei wird die Ableitung noch einer Gewichtung in Funktion der aktuellen Getriebeübersetzung unterzogen, um eine Anpassung der Regelgeschwindigkeit zu erreichen (Übersetzungsänderungen haben bei hoher Getriebeübersetzung stärkere Auswirkung auf die Motorbelastung als bei niedriger).
IGDSOLLLIM1 = IGDSOLLalt + IGDDSOL_LIM*f(ABS(IG)) f=#FNIGDDFAK

3.3.2.7. Begrenzung der Getriebeverstellung

Zur zusätzlichen Begrenzung von IGDSOLLLIM1 kann vorgesehen sein, daß die Begrenzung der dem Fahrerwunsch entsprechenden Getriebeverstellung IGDSOLL1 nur bis höchstens einem zweiten Limit IGDSOLLLIM1LIM2 durchgeführt wird. Durch dieses Limit für die Begrenzung wird der Motordrückungsregelungsmodul im Bereich sehr kleiner Getriebeübersetzungen, bei denen der Einfluß der Getriebeverstellung auf die Motorbelastung abnimmt, in seiner Wirkung unterdrückt.

Wenn KR nicht eingelegt (Vorwärtsfahrt):
IGDSOLLLIM1LIM2 = f(IG)        f =
#FNIGDSOLLLIM1LIM2
IGDSOLLLIM1 = MAX(IGDSOLLLIM1; IGDSOLLLIM1LIM2)
IGDSOLL2 = MIN( IGDSOLL1; IGDSOLLLIM1)
Wenn KR eingelegt (Retourfahrt):
IGDSOLLLIM1LIM2 = -f(-IG)        f =
#FMGDSOLLLIM 1 LIM2
IGDSOLLLIM1 = MIN(IGDSOLLLIM1; IGDSOLLLIM1LIM2)
IGDSOLL2 = MAX( IGDSOLL1; IGDSOLLLIM1)

3.3.3. Begrenzung durch Getriebegrenzen

Zur Berechnung der endgültigen Soll-Getriebeübersetzungsänderung IGDSOLL als Eingangsgröße für den Getrieberegelungsmodul wird IGDSOLL2 noch bei Annäherung an die Getriebegrenzen abgesenkt, um ein abruptes Absinken der Beschleunigung zu vermeiden.

Zusätzlich erfolgt eine Begrenzung entsprechend der maximal möglichen Variator-Verstellgeschwindigkeit #IVDMAX, um den Motordrückungsregelung im physikalisch möglichen Stellbereich zu halten.

Abfangen bei Erreichen der oberen Übersetzungsgrenze:

IGDSOLLIGMAX = f(IG)        f = #FNIGDSOLLIGMAX

Abfangen bei Erreichen der unteren Übersetzungsgrenze:

IGDSOLLIGMIN = f(IG)        f = #FNIGDSOLLIGMIN

Getriebe-Verstellgeschwindigkeit bei max. Variator-Verstellgeschwindigkeit:

IGDSOLLIVDMAX = #IVDMAX / Abs(IB)

Die Bereichsübersetzung IB ist das Verhältnis von Variator-Verstellgeschwindigkeit und Getriebe- Verstellgeschwindigkeit.

Maximalwert für Getriebeverstellgeschwindigkeit:

IGDSOLLMAX = MIN(IGDSOLLIGMAX, IGDSOLLIVDMAX)

Minimalwert für Getriebeverstellgeschwindigkeit:

IGDSOLLMIN = MAX(IGDSOLLIGMIN, -IGDSOLLIVDMAX)

Berechnung von IGDSOLL:

Wenn IGDSOLL2 größer IGDSOLLMAX:
    IGDSOLL = IGDSOLLMAX
Wenn IGDSOLL2 kleiner IGDSOLLMIN:
    IGDSOLL = IGDSOLLMIN
Wenn IGDSOLL2 zwischen IGDSOLLMAX und IGDSOLLMIN:
    IGDSOLL = IGDSOLL2

## 4. Getrieberegelungsmodul

Vom Getrieberegelungsmodul werden aus dem Übersetzungsänderungswunsch IGDSOLL des Fahrregelungsmoduls, sowie aus einem allfälligen Getriebe-Trennwunsch (Neutralschaltung oder Getriebetrennung beim Bremsen etc.) die geeigneten Steuersignale für die Kupplungen und den Variator berechnet. Die Berechnung besteht aus mehreren Logikpfade, die je nach Kupplungszustand oder Kupplungswunsch (Getriebetrennung) und nach Initialisierung durchlaufen werden.

Der Logikteil "Getriebesteuerung bei eingelegtem Bereich" besorgt die Getriebesteuerung für normalen Fahrbetrieb. Der zeitliche Ablauf des Bereichswechsels wird durch einen Timer TBW gesteuert. Da die Getriebesteuerung selbst von dem erfindungsgemäßen Verfahren nur am Rande berührt wird, wird es hier nicht weiter beschrieben.

## 5. Motorregelungsmodul

Der Motorregelungsmodul liefert das Ausgangssignal (Soll-Position XEPSOLL) für die elektrohydraulische Regelstangenbetätigung. Das vorliegende Beispiel bezieht sich auf einen Dieselmotor mit RQV-Regelung.

### 5.1. Regelstangenposition als Funktion der Fahrpedalstellung

Bei normalem Fahrbetrieb sowie bei durch Fahrpedalbetätigung übersteuertem Tempomatbetrieb (siehe auch 6.4 u. 6.5 weiter unten) wird die Regelstangenposition direkt aus der Fahrpedalstellung berechnet. Dieser direkte Zusammenhang hat sich für das subjektive Fahrgefühl als besonders günstig erwiesen (der Motor "hängt" am Gaspedal). Siehe "normaler Fahrbetrieb" in Fig.3. D (XEPSOLL = XEPSOLLFP)

Wenn FLKR gesetzt (Kriechen):

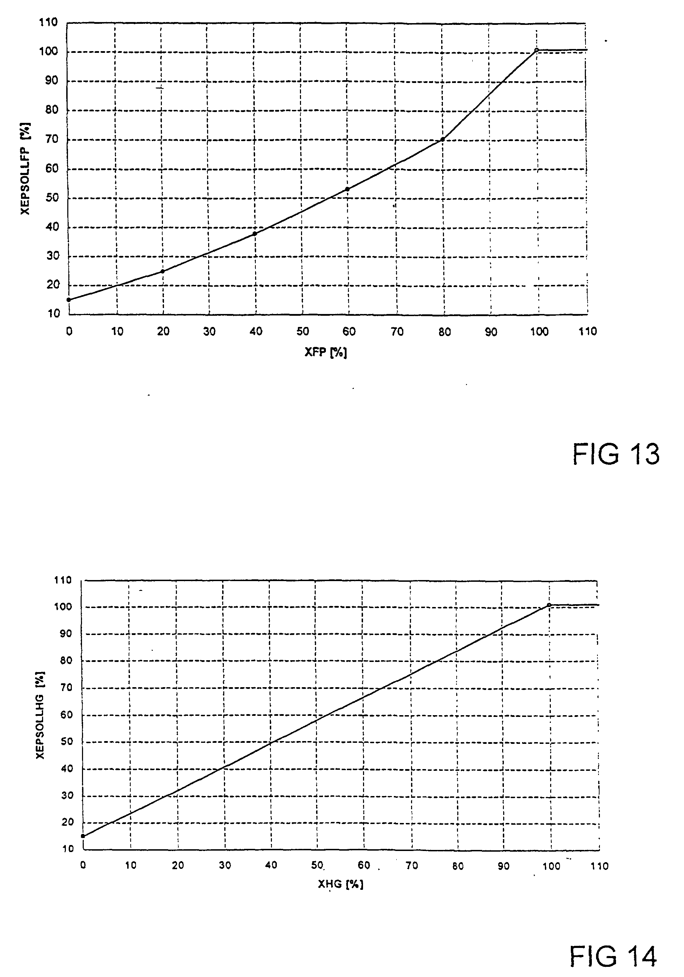

XEPSOLLFP = f(XFP)    f = #FNXEPSOLLFPKR siehe Fig.13

Wenn FLKR nicht gesetzt (Normalfahrt):
XEPSOLLFP = f(XFP)    f = #FNXEPSOLLFP ähnlich Fig.13

### 5.2. Motorbetätigung beim Bremsen

Bei Betriebsbremsung und eingelegtem Bereich (KUSTABC gesetzt) wird die Regelstangenposition solange auf das Minimum gesetzt, bis das Fahrzeug praktisch stillsteht oder rückwärts rollt. Dadurch wird vermieden, daß der Motor bei Unterschreiten der bei Normalbetrieb eingestellten Leerlaufdrehzahl gegen die Bremswirkung antreibt.
XEPSOLL = 0

Bei erfolgter Bremstrennung oder Fahrzeugstillstand oder noch gesetztem Tempomatbetrieb (sehr kurzes Antippen am Bremspedal) oder bei aktivierter Handgastrennung werden auch beim Bremsen die normalen Motorsteuerungsfunktionen durchlaufen.

### 5.3. Handgasbetrieb

Bei Handgasbetrieb wird die Regelstangen-Sollposition als Funktion der Handgasstellung XHG berechnet.
XEPSOLLHG = f(XHG)    f = #FNXEPSOLLHG siehe Fig. 13
Wenn FLHG nicht gesetzt        und
wenn XHG größer #XHGLIM1        und
wenn XEPSOLLHG größer XEPSOLLalt:

FLHG wird gesetzt

Durch die Bedingung "XHG größer #XHGLIM1" wird die Position des Handgashebels und damit der Fahrerwunsch erfaßt; durch die Bedingung "XEPSOLLHG größer XEPSOLLalt" wird abgesichert, daß bei Beginn des Handgasbetriebes nicht plötzlich Gas weggenommen wird. Ist das Handgas-Flag nach Durchlauf obiger Bedingungen gesetzt, erfolgt die Ansteuerung der Regelstange im Handgas-Modus.
Wenn FLHG gesetzt        und
wenn XHG kleiner #XHGLIM2        und
wenn XEPSOLLFP kleiner #XEPLIMHG:

FLHG wird gelöscht

Durch die Bedingung "XEPSOLLFP kleiner #XEPLIMHG" wird vermieden, daß bei Verlassen des Handgasbetriebes plötzlich Gas gegeben wird.
XEPSOLL = XEPSOLLHG

### 5.4. Motorbetätigung bei Tempomatfunktion

Bei Tempomatbetrieb (FLTM gesetzt und kein Handgasbetrieb) wird die Regelstange automatisch durch eine Reihe von Funktionen gesteuert.

#### 5.4.1. Stellgeschwindigkeit zum Erreichen der Sollbeschleunigung

Ziel der folgenden Funktionen ist es, die Regelstange so schnell zu bewegen, daß die Sollbeschleunigung (unter Berücksichtigung der aktuellen Getriebeverstellung) erreicht wird.

Motordrehzahlgradient entsprechend der Sollbeschleunigung:
NHADSOLL1 = NABDSOLLTM/IG

Notwendiger Motordrehzahlgradient zum Erreichen der Sollbeschleunigung:
NHADSOLL2 = NHADSOLL1 - IGDSOLL*NHA/IG

Regelstangen-Stellgeschwindigkeit zum Erreichen der Sollbeschleunigung:
XEPDMIN = f(NHADSOLL2)    f= #FNXEPDMIN

#### 5.4.2. Stellgeschwindigkeit als Funktion der Sollbeschleunigung

Diese Funktion dient im wesentlichen zum automatischen "Gaswegnehmen", wenn die Sollbeschleunigung negativ ist. Basis ist der Soll-Eingangsdrehzahlgradient aus 6.4.1, welcher der Tempomat- Sollbeschleunigung entspricht.

Sollgeschwindigkeit der Regelstange:

XEPDSOLL1 = f(NHADSOLL1)     f= #FNXEPDSOLL1, eine lineare Funktion mit Grenzen,

### 5.4.3. Position der Regelstange aus Getriebeübersetzung und Motordrehzahl

Um ein gutes Ansprechverhalten der Motorregelung zu erreichen, wird die Regelstangenposition immer in der Nähe der RQV-Regelgrenzen gehalten, zwischen einer minimalen zulässigen Regelstangenposition XEPMIN und einer maximalen zulässigen Regelstangenposition XEPMAX.

### Minimale zulässige Regelstangenposition:

Eine erste Mindestposition der Regelstange wird in Funktion der Getriebeübersetzung vorgegeben. Damit wird das Leistungsvermögen des Motors der Fahrgeschwindigkeit angepaßt.

XEPMIN1 = f(Abs(IG))     f = #FNXEPMIN1

Eine zweite Mindestposition ergibt sich daraus, daß die Regelstangenposition immer in der Nähe der RQV-Regelgrenzen gehalten wird, um ein gutes Ansprechverhalten der Motorregelung zu erreichen. Aus diesen beiden Mindestpositionen erfolgt ggf eine Maximum-Auswahl.

XEPMIN = f(NMOT)     f = #FNXEPMIN

XEPMIN' = MAX(XEPMIN1, XEPMIN)

Max. zulässige Regelstangenposition:

XEPMAX = f(NMOT)     #FNXEPMAX

### 5.4.4. Resultierende Regelstangenposition

### Verstellgeschwindigkeit der Regelstange:

Die Verstellgeschwindigkeit zum Erreichen der Mindestposition XEPMIN1 (siehe 3.2.2) wird dahingehend begrenzt, daß die Mindestposition nicht überschritten wird.

Wenn XEPDMIN1 größer XEPMIN1 - XEPSOLLalt:

XEPDMIN1 = XEPMIN1 - XEPSOLLalt

Aus XEPDMIN und der Verstellgeschwindigkeit XEPDSoll1 wird der kleinere Wert zur Stellgeschwindigkeit XEPSOLL ausgewählt:

Wenn XEPDMIN kleiner XEPDSOLL1:

XEPDSOLL = XEPDMIN

Wenn XEPDMIN größer XEPDSOLL1:

XEPDSOLL = XEPDSOLL1

Durch Begrenzung mit XEPDMIN1 nach unten wird gewährleistet, daß die Mindestposition XEPMIN1 nicht unterschritten wird:

Wenn XEPDMIN1 größer XEPDSOLL:

XEPDSOLL = XEPDMIN1

### Sollposition der Regelstange:

Ein erster Basiswert für die Sollposition der Regelstange ergibt sich durch Addition der Sollgeschwindigkeit zur aktuellen Sollposition.

XEPSOLL1 = XEPSOLLalt + XEPDSOLL

Durch Begrenzung des Basiswertes XEPSOLL1 mit XEPMAX und -MIN (6.4.3) ergibt sich die resultierende Sollposition für Tempomatbetrieb XEPSOLLTM:

Wenn XEPSOLL1 größer XEPMAX:

XEPSOLLTM = XEPMAX

Wenn XEPSOLL1 kleiner XEPMIN:

XEPSOLLTM = XEPMIN

Wenn XEPSOLL1 zwischen XEPMAX und XEPMIN:

XEPSOLLTM = XEPSOLL1

Für die endgültige Sollposition XEPSOLL wird das Maximum aus XEPSOLLTM und XEPFP (6.4.1) ausgewählt, um ein Übersteuern des Tempomat-Modus durch Fahrpedalbetätigung zu ermöglichen

Wenn XEPSOLLFP größer XEPSOLLTM:

XEPSOLL = XEPSOLLFP

Wenn XEPSOLLFP kleiner XEPSOLLTM:

XEPSOLL = XEPSOLLTM

Wenn der Tempomat nicht aktiviert ist, wird die resultierende Sollposition für Tempomatbetrieb XEPSOLLTM entsprechend initialisiert:

XEPSOLLTM = XEP

### 5.5. Ansteuerung der Regelstange

Bei einem Dieselmotor mit konventionellem Regler (z.B. mit RQV-Verhalten) und einer elektrohydraulisch betätigten Regelstange erfolgt die Ansteuerung über ein pulsweitenmoduliertes Signal. Die Pulsweite wird als Funktion der Sollposition berechnet. Diese Form der Ansteuerung gleicht der bei einem konventionellen Stufengetriebe und elektronischem Gaspedal (E-Gas) geübten und wird daher nicht näher beschrieben.

Dank des erfindungsgemäßen Verfahrens ist es somit möglich, einen konventionell ausgestatteten Antriebsmotor einzusetzen. Bei Verzicht auf die Tempomatfunktion ist es dank der Erfindung sogar möglich, die Regelstange des Dieselmotors rein mechanisch zu betätigen.

### Patentansprüche

1.  Verfahren zum Steuern einer Fahrzeugantriebseinheit bestehend aus einem Antriebsmotor (1) und einem Getriebe (2) mit stufenlos verstellbarer Übersetzung, bei welchem Verfahren aus Befehlssignalen und aus Zustandssignalen Steuersignale für den Antriebsmotor (1) und für das Getriebe (2) generiert werden, wobei ein Sollgradient für die Getriebeübersetzung ermittelt wird, bestehend in folgenden Schritten:

    a) Aus einer Fahrhebelstellung (XFP, XHG) und der momentanen Fahrgeschwindigkeit (VFZ) wird mittels eines Kennfeldes (#ASOLLF, #ASOLLR) die Fahrzeugsollbeschleunigung (ASOLL) beziehungsweise der Abtriebsdrehzahlgradient (NABDSOLL) berechnet,

    b) Aus der Fahrzeugsollbeschleunigung (ASOLL) und der aktuellen Drehzahl (NMOT) des Antriebsmotors (1) wird eine Getriebesollverstellung (IGDSOLL1) berechnet,

    c) Aus der Getriebesollverstellung (IGDSOLL1) wird eine begrenzte Getriebesollverstellung (IGDSOLL) so ermittelt, daß die Motordrehzahl (NMOT) nicht unter einen Wert fällt, der eine Funktion (NMOTMMAX) der Stellung des Leistungsstellorganes (XEP) des Antriebsmotors ist,

    d) Das stufenlose Getriebe (2) wird entsprechend der begrenzten Getriebesollverstellung (IGDSOLL) verstellt;

    e) Die Ansteuergröße (XEPSOLL) für das Leistungsstellorgan (16) des Antriebsmotors (1) wird direkt aus der Fahrhebelstellung (XFP, XHG) gewonnen.

2.  Verfahren nach Anspruch 1, **dadurch gekennzeichnet, daß** zur Berechnung der Fahrzeugsollbeschleunigung (ASOLL) auf grund von Befehlssignalen (FLKR, FLTM) weitere Kennfelder (#ASOLLFKR, #ASOLLRKR) oder Berechnungsfunktionen (#FNASOLLB, #FNASOLLTM) herangezogen werden.

3.  Verfahren nach Anspruch 1, wobei der Antriebsmotor (1) ein Dieselmotor mit einer Regelstange (16) als Leistungsstellorgan ist, **dadurch gekennzeichnet, daß** dessen Ansteuergröße die Sollposition (XEPSOLL, XEPSOLLFP) der Regelstange (16) ist.

4.  Verfahren nach Anspruch 1 für eine Fahrzeugantriebseinheit, die nebst dem Fahrzeug auch eine Zapfwelle (5) antreibt und wobei als Fahrhebel ein Fahrpedal (8) und ein Handgashebel (9) vorgesehen sind, **dadurch gekennzeichnet, daß** bei aktiviertem Handgas dessen Stellung (XHG) nur die Ansteuergröße (XEPSOLL) für den Antriebsmotor (1) bestimmt und die Stellung (XFP) des Fahrpedales (8) nur eine Verstellung der Getriebeübersetzung (IG) bewirkt.

5.  Verfahren nach Anspruch 1, **dadurch gekennzeichnet, daß** zur Berücksichtigung der aktuellen Drehzahl (NMOT) des Antriebsmotors (1) bei der Ermittlung der Getriebesollverstellung (IGDSOLL1) auch der Gradient der Drehzahl (NMOTD) des Antriebsmotors (1) berücksichtigt wird.

6. Verfahren nach Anspruch 2, **dadurch gekennzeichnet, daß** bei Einschalten der Tempomatfunktion mittels des Tempomathebels (11) die momentane Geschwindigkeit des Fahrzeuges (VFZ) als Sollwert (VSOLLTMMEM) gespeichert wird und in der Folge die Fahrzeugsollbeschleunigung (ASOLLTM) beziehungsweise der Abtriebsdrehzahlgradient (NABDSOLLTM) als Funktion der Geschwindigkeitsabweichung (VSOLLTMMEM - VFZ) und aus diesem unter Berücksichtigung des momentanen Motorbetriebszustandes die Getriebesollverstellung (IGDSOLL) berechnet wird.

7. Verfahren nach Anspruch 1, **dadurch gekennzeichnet, daß** eine Stillstandsregelung vorgesehen ist, die in folgenden Schritten erfolgt:

   a) Wenn das Fahrpedal (8) unbetätigt ist und erstmals Stillstand des Fahrzeuges eintritt, wird die Sollstillstandsposition des Fahrzeuges (NABI) durch Initialisieren eines Integralwertes festgelegt,

   b) Berechnen der Abweichung von der Sollstillstandsposition des Fahrzeuges (NABI) durch Integration der Abtriebsdrehzahl (NAB),

   c) Aus der Abweichung von der Sollstillstandsposition des Fahrzeuges (NABI) wird mittels einer Funktion (#FNNABDSOLL) und gegebenenfalls auch aus der Abtriebsdrehzahl (NAB) und einer weiteren Funktion (#FNNABDSOLL1) ein Soll-Abtriebsdrehzahlgradient (NABDSOLL) berechnet.

   d) Durch Betätigen des Fahrpedales (8) wird die Stillstandregelung beendet.

8. Verfahren nach Anspruch 1, **dadurch gekennzeichnet, daß** die Begrenzung der Getriebesollverstellung (IGDSOLL) in folgenden Schritten abläuft:

   a) Aus der Position des Leistungsstellorganes (16) des Antriebsmotors (XEP) wird mittels einer Funktion (#FNXEPNMOT) die dem gewünschten Motorbetriebspunkt entsprechende Motordrehzahl (NMOTMMAX) berechnet, welche nicht unterschritten werden soll.

   b) Aus der momentanen Motordrehzahl (NMOT) und der gewünschten Motordrehzahl (NMOTMMAX) wird eine Regelabweichung (DNMOT) gebildet,

   c) Aus der Regelabweichung (DNMOT) wird anhand einer vorgegebenen Funktion (#FNNMOTDMIN1) ein Sollmotordrehzahlgradient (NMOTDMIN; NMOTDMIN1) ermittelt,

   d) Aus dem Ist-Motordrehzahlgradienten (DNMOT) und dem Soll-Motordrehzahlgradienten (NMOTDMIN; NMOTDMIN1) wird eine Gradientenregelabweichung (DNMOTDMIN) ermittelt und daraus anhand einer Funktion (#FNIGDDLIM) ein Grenzwert für die erste Ableitung der Getriebesollverstellung (IGDDSOLLLIM) berechnet und begrenzt.

   e) Aus der Getriebesollverstellung(IGDDSOLLLIM) wird durch Integration der Grenzwert IGDSOLLLIM1 berechnet und dann die Übersetzungsänderung IGDSOLL1 mit dem Grenzwert IGDSOLLLIM1 nach oben begrenzt.

9. Verfahren nach Anspruch 8, **dadurch gekennzeichnet, daß** zusätzlich:

   a) Eine Mindest-Motordrehzahl (NMOTMIN) als vorgegebene Funktion (#FNNMOTMIN) der Getriebeübersetzung (IG) oder der Fahrzeuggeschwindigkeit VFZ ermittelt wird,

   b) Aus der momentanen Motordrehzahl (NMOT) und der Mindest-Motordrehzahl (NMOTMIN) eine Drehzahlabweichung (NMOT - NMOTMIN) gebildet wird,

   c) Aus der Regelabweichung (NMOT - NMOTMIN) anhand einer weiteren vorgegebenen Funktion (#FNNMOTDMIN2) ein Motordrehzahlgradient (NMOTDMIN2) gebildet wird,

   d) Aus den beiden Mindest-Soll-Motordrehzahlgradienten (NMOTDMIN1, NMOTDMIN2) der größere als endgültiger Motordrehzahlgradient (NMOTDMIN) ausgewählt wird.

10. Verfahren nach Anspruch 1, **dadurch gekennzeichnet, daß** die Getriebesollverstellung (IGDSOLL1) bei Annäherung an die Bereichsgrenzen abgesenkt wird.

11. Verfahren nach Anspruch 1, **dadurch gekennzeichnet, daß** die Abtriebsdrehzahl (NAB) aus Drehzahlen von Gliedern des Summierungsplanetengetriebes (30) ermittelt wird.

**Claims**

1. Method of controlling a vehicle drive unit comprising a driving engine (1) and an infinitely variable speed transmission (2), whereby control signals for the driving engine (1) and for the transmission (2) are generated from command signals and from status signals, wherein a setpoint gradient for the transmission ratio is determined, comprising the following steps:

   a) from a driving lever position (XFP, XHG) and the instantaneous driving velocity (VFZ) the vehicle setpoint acceleration (ASOLL) and/or the output speed gradient (NABDSOLL) is calculated by means of a characteristic map (#ASOLLF, #ASOLLR),

   b) from the vehicle setpoint acceleration (ASOLL) and the current rotational speed (NMOT) of the driving engine (1) a transmission setpoint variation (IGDSOLL1) is calculated,

   c) from the transmission setpoint variation (IGDSOLL1) a limited transmission setpoint variation (IGDSOLL) is determined in such a way that the engine speed (NMOT) does not fall below a value which is a function (NMOTMMAX) of the position of the power controller unit (XEP) of the driving engine,

   d) the infinitely variable speed transmission (2) is adjusted in accordance with the limited transmission setpoint variation (IGDSOLL) ;

   e) the trigger quantity (XEPSOLL) for the power controller unit (16) of the driving engine (1) is obtained directly from the driving lever position (XFP, XHG) .

2. Method according to claim 1, **characterized in that** further characteristic maps (#ASOLLFKR, #ASOLLRKR) or calculation functions (#FNASOLLB, #FNASOLLTM) are used to calculate the vehicle setpoint acceleration (ASOLL) on the basis of command signals (FLKR, FLTM).

3. Method according to claim 1, wherein the driving engine (1) is a diesel engine with a control rod (16) as a power controller unit, **characterized in that** its trigger quantity is the setpoint position (XEPSOLL, XEPSOLLFP) of the control rod (16).

4. Method according to claim 1 for a vehicle drive unit, which besides the vehicle also drives a power take-off shaft (5) and wherein as driving levers an accelerator pedal (8) and a throttle hand lever (9) are provided, **characterized in that**, when the throttle hand lever is activated, its position (XHG) determines only the trigger quantity (XEPSOLL) for the driving engine (1) and the position (XFP) of the accelerator pedal (8) effects only a variation of the transmission ratio (IG).

5. Method according to claim 1, **characterized in that** to take account of the current rotational speed (NMOT) of the driving engine (1) during determination of the transmission setpoint variation (IGDSOLL1) the gradient of the rotational speed (NMOTD) of the driving engine (1) is also taken into account.

6. Method according to claim 2, **characterized in that** upon switching-on of the cruise control function by means of the cruise control lever (11) the instantaneous velocity of the vehicle (VFZ) is stored as a setpoint value (VSOLLTMMEM) and in succession the vehicle setpoint acceleration (ASOLLTM) and/or the output speed gradient (NABDSOLLTM) as a function of the velocity deviation (VSOLLTMMEM - VFZ) and, from the latter, while taking account of the instantaneous engine operating state, the transmission setpoint variation (IGDSOLL) is calculated.

7. Method according to claim 1, **characterized in that** zero-speed control is provided, which is effected in the following steps:

a) when the accelerator pedal (8) is not actuated and zero-speed of the vehicle occurs for the first time, the setpoint zero-speed position of the vehicle (NABI) is defined by initializing an integrated measurand,

b) calculation of the deviation from the setpoint zero-speed position of the vehicle (NABI) through integration of the output speed (NAB),

c) from the deviation from the setpoint zero-speed position of the vehicle (NABI) by means of a function (#FNNABDSOLL) and optionally also from the output speed (NAB) and a further function (#FNNABDSOLL1) a setpoint output speed gradient (NABDSOLL) is calculated,

d) by actuating the accelerator pedal (8) zero-speed control is terminated.

8. Method according to claim 1, **characterized in that** the limitation of the transmission setpoint variation (IGDSOLL) is executed in the following steps:

a) from the position of the power controller unit (16) of the driving engine (XEP) by means of a function (#FNXEPNMOT) the engine speed (NMOTMMAX), which corresponds to the desired engine operating point and is not to be undershot, is calculated,

b) from the instantaneous engine speed (NMOT) and the desired engine speed (NMOTMMAX) a system deviation (DNMOT) is formed,

c) from the system deviation (DNMOT) using a defined function (#FNNMOTDMIN1) a setpoint engine speed gradient (NMOTDMIN; NMOTDMIN1) is determined,

d) from the actual engine speed gradient (DNMOT) and the setpoint engine speed gradient (NMOTDMIN; NMOTDMIN1) a gradient system deviation (DNMOTDMIN) is determined and on said basis using a function (#FNIGDDLIM) a limit value for the first derivation of the transmission setpoint variation (IGDDSOLLLIM) is calculated and limited,

e) from the transmission setpoint variation (IGDDSOLLLIM) by integration the limit value IGDSOLLLIM1 is calculated and then the ratio change IGDSOLL1 is limited in an upward direction by the limit value IGDSOLLLIM1.

9. Method according to claim 8, **characterized in that** in addition:

a) a minimum engine speed (NMOTMIN) is determined as a defined function (#FNNMOTMIN) of the transmission ratio (IG) or of the vehicle velocity VFZ,

b) from the instantaneous engine speed (NMOT) and the minimum engine speed (NMOTMIN) a speed deviation (NMOT - NMOTMIN) is formed,

c) from the system deviation (NMOT - NMOTMIN) using a further defined function (#FNNMOTDMIN2) an engine speed gradient (NMOTDMIN2) is formed,

d) of the two minimum setpoint engine speed gradients (NMOTDMIN1, NMOTDMIN2) the greater is selected as a final engine speed gradient (NMOTDMIN).

10. Method according to claim 1, **characterized in that** the transmission setpoint variation (IGDSOLL1) is lowered upon an approach towards the range limits.

11. Method according to claim 1, **characterized in that** the output speed (NAB) is determined from rotational speeds of elements of the summarizing planetary gear (30).

**Revendications**

1. Procédé pour commander une unité d'entraînement de véhicule automobile composée d'un moteur d'entraînement (1) et d'une transmission (2) à rapport de transmission réglable par variation continue, procédé dans lequel des signaux de commande pour le moteur d'entraînement (1) et pour la transmission (2) sont générés à partir de signaux d'ordre et de signaux d'état, un gradient de consigne étant calculé pour le rapport de transmission, le procédé étant composé des étapes suivantes :

   a) l'accélération de consigne (ASOLL) du véhicule ou le gradient de vitesse de rotation de sortie (NABDSOLL) est calculé à partir que d'une position du levier de commande (XFP, XHG) et de la vitesse instantanée du véhicule (ASOLL), au moyen d'un diagramme caractéristique (#ASOLLF, #ASOLLR),

   b) une variation de consigne (IGDSOLL1) de la transmission est calculée à partir de l'accélération de consigne (ASOLL) du véhicule et de la vitesse de rotation actuelle (NMOT) du moteur d'entraînement (1),

   c) une variation de consigne limitée (IGDSOLL) de la transmission est calculée à partir de la variation de consigne (IGDSOLL1) de la transmission de telle manière que la vitesse de rotation (NMOT) du moteur ne tombe pas en dessous d'une valeur qui est une fonction (NMOTMMAX) de la position de l'organe (XEP) de réglage de la puissance du moteur d'entraînement,

   d) la transmission à variation continue (2) subit une variation d'une façon qui correspond à la variation de consigne limitée (IGDSOLL) de la transmission,

   e) la grandeur pilote (XEPSOLL) pour l'organe de réglage (16) de la puissance du moteur d'entraînement (1) est dérivée directement de la position (XFP, XHG) du levier de commande.

2. Procédé selon la revendication 1, **caractérisé en ce que**, pour le calcul de l'accélération de consigne (ASOLL) du véhicule sur la base de signaux d'ordre (FLKR, FLTM), on utilise d'autres diagrammes caractéristiques (#ASOLLFKR, #ASOLLRKR) ou des fonctions de calcul (#FNASOLLB, # FNASOLLTM).

3. Procédé selon la revendication 1, dans lequel le moteur d'entraînement (1) est un moteur diesel comprenant une tige de réglage (16) en tant qu'organe de réglage de la puissance, **caractérisé** en ce la grandeur pilote de ce moteur est la position de consigne (XEPSOLL, XEPSOLLFP) de la tige de réglage (16).

4. Procédé selon la revendication 1 pour une unité d'entraînement de véhicule qui entraîne, en plus du véhicule, également un arbre de prise de force (5) et dans lequel il est prévu comme leviers de commande une pédale d'accélérateur (8) et un levier des gaz à main (9), **caractérisé en ce que**, lorsque le levier des gaz à main est activé, sa position (XHG) détermine uniquement la grandeur de pilotage (XEPSOLL) pour le moteur d'entraînement (1) et la position (XPF) de la pédale d'accélérateur (8) détermine uniquement une variation du rapport (IG) de la transmission.

5. Procédé selon la revendication 1, **caractérisé en ce que**, pour tenir compte de la vitesse de rotation actuelle (NMOT) du moteur d'entraînement (1) lors du calcul de la variation de consigne (IGDSOLL1) de la transmission, on tient également compte du gradient de la vitesse de rotation (NMOTD) du moteur d'entraînement (1).

6. Procédé le selon la revendication 2, **caractérisé en ce que**, lors de l'enclenchement de la fonction Tempomat au moyen du levier de Tempomat (11), la vitesse instantanée du véhicule (VFZ) est mémorisée en tant que valeur de consigne (VSOLLTMMEM) et, dans la suite, l'accélération de consigne du véhicule (ASOLLTM) ou le gradient de vitesse de rotation de sortie (NABDSOLLTM) est calculé en fonction de l'écart de vitesse (VSOLLTMMEM - VFZ) et la variation consigne de la transmission (IGDSOLL) est calculée à partir de cet écart en tenant compte de l'état instantané de fonctionnement du moteur.

7. Procédé selon la revendication 1, **caractérisé en ce qu'**il est prévu une régulation de l'état d'arrêt qui s'effectue par les étapes suivantes :

   a) lorsque la pédale d'accélérateur (8) n'est pas actionnée et que l'état d'arrêt du véhicule se manifeste pour la première fois, la position d'état d'arrêt de consigne du véhicule (NABI) est fixée par l'initialisation d'une valeur intégrale,

b) l'écart par rapport à la position d'état d'arrêt de consigne du véhicule (NABI) est calculé par intégration de la vitesse de rotation de sortie (NAB),

c) un gradient de consigne de la vitesse de rotation de sortie (NABDSOLL) est calculé à partir de l'écart par rapport à la position d'état d'arrêt de consigne du véhicule (NABI) au moyen d'une fonction (#FNNABDSOLL) et éventuellement aussi à partir de la vitesse de rotation de sortie (NAB) et d'une autre fonction (#FNNABDSOLL1),

d) la régulation de l'état d'arrêt est terminée par l'actionnement de la pédale d'accélérateur (8).

**8.** Procédé selon la revendication 1, **caractérisé en ce que** la limitation de la variation de consigne de la transmission (IGDSOLL) se déroule selon les étapes suivantes :

a) à partir de la position de l'organe de réglage de la puissance (16) du moteur d'entraînement (XEP), on calcule au moyen d'une fonction (#FNXEPNMOT) la vitesse de rotation du moteur (NMOTMMAX), qui correspond au point de travail souhaité du moteur, en dessous de laquelle on ne doit pas tomber,

b) on forme un écart de régulation (DNMOT) à partir de la vitesse de rotation instantanée (NMOT) du moteur et de la vitesse de rotation souhaitée (NMOTMMAX),

c) à partir de l'écart de régulation (DNMOT), on obtient, à l'aide d'une fonction prédéterminée (#FNMOTDMIN1), un gradient de vitesse de rotation de consigne du moteur (NMOTDMIN; NMOTDMIN1).

d) à partir du gradient réel de vitesse de rotation du moteur (DNMOT) et du gradient de consigne de vitesse de rotation du moteur (NMOTDMIN; NMOTDMIN1), on obtient un écart de régulation du gradient (DNMOTDMIN) et, à partir de ce dernier, une valeur limite pour la première dérivée de la variation de consigne de la transmission (IGDDSOLLLIM) est calculée et limitée au moyen d'une fonction (#FNIGDDLIM).

e) à partir de la variation de consigne de la transmission (IGDDSOLLLIM), la valeur limite (IGDDSOLLLIM1) est calculée par intégration et, ensuite, la variation de rapport (IGDSOLL1) est limitée vers le haut par la valeur limite (IGDSOLLL1M1).

**9.** Procédé selon la revendication 8, **caractérisé en ce qu'**en outre :

a) une vitesse de rotation minimale du moteur (NMOTMIN) est obtenue en tant que fonction prédéterminée (#FNNMOTMIN) du rapport de la transmission (IG) ou de la vitesse (VFZ9 du véhicule,

b) un écart de vitesse de rotation (NMOT - NMOTMIN) est formé à partir de la vitesse de rotation instantanée (NMOT) du moteur et de la vitesse de rotation minimale (NMOTMIN) du moteur,

c) un gradient de vitesse de rotation du moteur (NMOTDMIN2) est formé à partir de l'écart de régulation (NMOT- NMOTMIN) au moyen d'une autre fonction prédéterminée (#FNNMOTDMIN2),

d) le plus grand des deux gradients de consigne de vitesse de rotation minimale du moteur (NMOTDMIN1, NMOTDMIN2) est sélectionné comme gradient définitif de vitesse de rotation du moteur (NMOTDMIN).

**10.** Procédé selon la revendication 1, **caractérisé en ce que** la variation de consigne (IGDSOLL1) de la transmission est réduite lorsqu'on se rapproche des limites de zones.

**11.** Procédé selon la revendication 1, **caractérisé en ce que** la vitesse de rotation de sortie (NAB) est obtenue à partir de vitesses de rotation d'organes du train planétaire de sommation (30).

FIG 1

VORWÄRTS
TEMPOMAT
XHG
XFP

- 7 -

XPSOLL

NAB

IGSOLL

XEP

NHA,NMOT

MOTOR

10  11  9  6

17  16  1  3  14  18  8  2  5  15  4

EP 0 967 107 B1

FIG 2

1 | Signalerfassung und -Verarbeitung

2 | Berechnung d. Basisgrößen

Hydrostatdrehzahl und -Verdrehung aus Stegdrehzahl 1 (2.1)

Variationsübersetzung und Gradient (2.2)

Antriebsdrehzahl und -Gradient mit Nullpunktsüberbrückung   (2.3)

Getriebeübersetzung(invers) und -Gradient (2.4)

Fahrzeuggeschwindigkeit (2.5)

Motordrehzahl (2.6)

Übersetzungsabweichung Variator zum Bereichswechselpunkt (2.7)

Drehzahlabweichung Variator zum Bereichswechselpunkt und -Gradient (2.8)

Kupplungsstellung ohne Drucksignale (2.9)

FIG 3 A

3 **FAHRREGLER**

FIG 3 B

Fahrpedal
unbetätigt
und
prakt.Stillstand des
Fahrzeuges?

—— ja ——

Stillstandsregelung
Berechnung des Soll-Abtriebsdrehzahlgradienten
N_ABD_SOLL

3.2.3

Berechnung der Soll-
Getriebeüberstezungsänderung IGDSOLL1

3.3

Bergrenzung der Übersetzungsänderung bei
Handgasbetrieb ohne Fahrpedalbetätigung

3.3.1

Begrenzung der Übersetzungsänderung
gegen zu starke Motordrückung

3.3.2

Begrenzung der Soll-Getriebeübersetzung durch
Getriebegrenzen

3.3.3

Getrieberegelung

4

FIG 3 C

MOTORREGELUNG

5

Berechnung der
Regelstangenposition in
Funktion von der
Fahrpedalstellung     5.1

Ist Bremse
betätigt und Bereich
eingelegt und Geschwindigkeitslimit nicht
überschritten     —ja→     Sollposition Regelstange
ist Null
(XEPSOLL=0)     5.2

nein

Bedingungen für
Handgasbetrieb werden
erfüllt     —ja→     Ansteuerung der Regelstange
erfolgt im Handgasmodus
(XEPSOLL=XEPSOLLHG)     5.3

nein

Ist Tempomat
gesetzt und kein
Handgasbetrieb     —ja→     Tempomatbetrieb

Regelstangenposition
(XEPSOLL)     5.4

nein

**Normaler Fahrbetrieb**

Wählhebelstellung
entgegen
Fahrbetrieb     —ja→

Begrenzung der
Regelstangenposition bei
Shuttle-Betrieb

nein

Ansteuerung der Regelstange   5.5

# FIG 3 D

(1) NMOTMAX=f(XEP)  #FNXEPNMOT

(2) DNMOT=NMOT-NMOTMMAX

(3) NMOTDMIN1=f(DNMOT) #FNMOTDMIN1
NMOTMIN=f(ABS(IG)) #FNNMOTMIN
NMOTMIN2=f(NMOT-NMOTMIN) #FNNMOTDMIN2
NMOTDMIN=MAX(NMOTDMIN1; NMOTDMIN2)

(4) DNMOTDMIN=NMOTD-NMOTMIN

NMOTD>#NMOTDLIM2(=0) — nein →

ja

DNMOTDMIN=MAX(DNMOTDMIN, #DNMOTDLIM (=0))

NMOTD>#NMOTDLIM3(=0) — nein →

ja

DNMOTDMIN=MIN(DNMOTDMIN; #DNMOTDLIM3 (=0))

(5) KR eingelegt — ja →

nein

IGDDOFFS=f(IGDSOLLLIM) #FNIGDDOFFS
IGDDSOLLLIM=f(DNMOTDMIN)+IGDDOFFS #FNIGDDLIM

IGDSOLLalt < #IGDSOLLLIMIT (=0)
und
IGDSOLL1 > #IGDSOLL1LIMIT (=0)
und
IGDDSOLLLIM > #IGDDSOLLLIMLIMIT (=0) — nein →

ja

IGDDSOLLLIM=IGDDSOLLLIM*#IGDDSOLLLIMMUL(=5)

IGDDOFFS=f(-IGDSOLLLIM) #FNIGDDOFFS
IGDDSOLLLIM=-f(DNMOTDMIN)-IGDDOFFS #FNIGDDLIM

IGDSOLLalt > #IGDSOLLLIMIT (=0)
und
IGDSOLL1 < -#IGDSOLL1LIMIT (=0)
und
IGDDSOLLLIM < -#IGDDSOLLLIMLIMIT (=0) — nein →

ja

IGDDSOLLLIM=IGDDSOLLLIM-#IGDDSOLLLIMMUL (=5)

(6) IGDSOLLLIM1=
IGDalt+IGDDSOLLLIM*f(ABS(IG))  #FNIGDDFAK

(7) KR eingelegt — ja →

nein

IGDSOLLLIM1LIM2=f((IG)  #FNIGDSOLLLIM1LIM2
IGDSOLLLIM1=MAX(IGDSOLLLIM1_;IGDSOLLLIM1LIM2)
IGDSOLL2=MIN(IGDSOLL1_; IGDSOLLLIM1)

IGDSOLLLIM1LIM2=-f(-IG)  #FNIGDSOLLLIM1LIM2
IGDSOLLLIM1=MIN(IGDSOLLLIM1_;IGDSOLLLIM1LIM2)
IGDSOLL2=MAX(IGDSOLL1_; IGDSOLLLIM1)

FIG.4

29

**FIG 5**

**FIG 6**

FIG 7

FIG 8

Abb.1  #FNXEPNMOT

FIG 9

# FNMOTDMIN1

FIG 10

#FNNMOTMIN

FIG 11

# FNMOTDMIN2

FIG 12

FIG 13

FIG 14